(19) Europäisches Patentamt
European Patent Office
Office européen des brevets

(11) **EP 0 758 577 B1**

(12) **EUROPEAN PATENT SPECIFICATION**

(45) Date of publication and mention
of the grant of the patent:
**16.05.2001 Bulletin 2001/20**

(51) Int Cl.⁷: $B29B\ 11/16$, $B29C\ 51/12$, $B32B\ 27/04$

(21) Application number: **96904312.4**

(22) Date of filing: **01.03.1996**

(86) International application number:
**PCT/JP96/00507**

(87) International publication number:
**WO 96/26822 (06.09.1996 Gazette 1996/40)**

(54) **STAMPABLE SHEET MADE BY PAPERMAKING TECHNIQUE AND METHOD FOR MANUFACTURING LIGHTWEIGHT MOLDED STAMPABLE SHEET**

MIT DER PAPIERHERSTELLUNGSTECHNIK HERGESTELLTE VERPRESSBARE FOLIE UND VERFAHREN ZUM HERSTELLEN VON VERPRESSTEN FOLIEN MIT GERINGEN GEWICHT

FEUILLE A ESTAMPER FABRIQUEE SELON LES TECHNIQUES DE PAPETERIE, ET PROCEDE DE FABRICATION D'UNE FEUILLE A ESTAMPER MOULEE ET LEGERE

(84) Designated Contracting States:
**DE FI FR GB IT SE**

(30) Priority: **01.03.1995 JP 4154995**
**01.03.1995 JP 4155095**
**07.03.1995 JP 4678695**
**07.03.1995 JP 4678795**
**07.09.1995 JP 22993095**
**17.10.1995 JP 26809895**

(43) Date of publication of application:
**19.02.1997 Bulletin 1997/08**

(73) Proprietors:
• **Kawasaki Steel Corporation**
**Chuo-ku, Kobe-shi, Hyogo 651 (JP)**
• **K-Plasheet Corporation**
**Chiba-shi, Chiba 260 (JP)**

(72) Inventors:
• **NAGAYAMA, Katsuhiro,**
**Kawasaki Steel Corporation,**
**Chuo-ku, Chiba-shi, Chiba 260 (JP)**
• **FUJIMAKI, Masami, Kawasaki Steel Corporation,**
**Chuo-ku, Chiba-shi, Chiba 260 (JP)**
• **TAKANO, Shigeru, Kawasaki Steel Corporation,**
**Chuo-ku, Chiba-shi, Chiba 260 (JP)**
• **MATSUMOTO, Taiji,**
**Kawasaki Steel Corporation,**
**Chuo-ku, Chiba-shi, Chiba 260 (JP)**

• **ONO, Tomoshige, Kawasaki Steel Corporation,**
**Chuo-ku, Chiba-shi, Chiba 260 (JP)**
• **NAGASHIMA, Yukio,**
**Kawasaki Steel Corporation,**
**Chuo-ku, Chiba-shi, Chiba 260 (JP)**
• **MASUI, Syohei**
**Soraku-gun Kyoto 619-02 (JP)**
• **FUNAKOSHI, Satoru 3-16-56-105, Toyosato**
**Osaka-shi Osaka 533 (JP)**
• **KOBAYASHI, Yuji**
**Chiba 263 (JP)**
• **YOSHITAKE, Hiroyuki**
**Chuo-ku Chiba-shi Chiba 260 (JP)**
• **SUNADA, Mitsuaki**
**Chiba-shi Chiba 260 (JP)**

(74) Representative: **Atkinson, Jonathan David Mark**
**Haseltine Lake & Co.,**
**Imperial House,**
**15-19 Kingsway**
**London WC2B 6UD (GB)**

(56) References cited:
**EP-A- 0 255 315**      **EP-A- 0 329 200**
**EP-A- 0 341 977**      **EP-A- 0 476 538**
**DE-A- 4 400 894**      **JP-A- 3 161 335**
**JP-A- 5 016 274**

**Description**

TECHNICAL FIELD

This invention relates to a paper-made stampable sheet and a light-weight stampable sheet shaped body produced from this sheet and a method of producing the same. Particularly, a light-weight stampable sheet shaped body lined with a decorative skin according to the invention has high rigidity and improved adhesiveness or non-permeability between substrate and skin, if necessary, and is usable in wide fields such as interior members for automobiles, household electrical appliances, building materials and the like.

BACKGROUND ART

Recently, stampable sheets consisting essentially of reinforcing fibers and thermoplastic resin have been considered as alternative products for metal worked products because they can be shaped into a complicated form and the resulting shaped body is high in strength and light in weight.

Such a stampable sheet is mainly produced by the following two methods. That is, there are

①. Laminating process

A plurality of strand reinforcing fibers are entangled with each other by means of a needle to form a mat of the strand reinforcing fibers and a thermoplastic resin is laminated thereonto. The laminate is then heated and pressed and cooled in the compressed state to form a solidified sheet or so-called laminated stampable sheet;

②. Paper-making process

A dispersion of particulate thermoplastic resin and reinforcing fibers dispersed in an aqueous surfactant solution containing fine bubbles is applied to a porous support to prepare a sheet-like web (deposit) and then the web is heated to a temperature of not lower than the melting point of the thermoplastic resin but lower than the decomposition point thereof, pressed and cooled in the compressed state to form a solidified sheet or so-called paper-made stampable sheet.

The stampable sheet obtained by such a method contains the reinforcing fibers substantially opened to a monofilament state, so that when the sheet is again heated to a temperature of not lower than the melting point of the resin but lower than the decomposition point thereof, the resin becomes molten and hence the fibers restrained by the resin create stress mitigation (spring-back) to form an expansion sheet expanded to not less than several times the original thickness. Then, the expansion sheet is subjected to compression forming, vacuum forming, pressure forming or the like, whereby it is possible to conduct expansion forming of a light weight stampable sheet shaped body having a given shape. That is, a porous light weight stampable sheet shaped body having a density smaller than that of the stampable sheet and a high face rigidity can be obtained by adjusting the mold clearance at the completion of the expansion forming so as to be larger than the thickness of the stampable sheet before the heating.

When the above laminated stampable sheet is used as a starting material for the expansion forming, the expandability on heating is poor and hence sufficient expansion forming can not be conducted. For this reason, the paper-made stampable sheet is usually used as a starting material for the above expansion forming.

Moreover, when the light weight stampable sheet shaped body is used in a part requiring decorativeness, it is general that the expansion sheet is laminated to and integrally united with a skin for decoration during the forming to form a light weight stampable sheet shaped body.

As to rigidity

The light weight stampable sheet shaped body and the method of producing the same are proposed in, for example, JP-A-60-179234 and JP-A-62-161529. However, it can not be said that the light weight stampable sheet shaped body obtained by the paper-making process according to these proposals is always excellent in rigidity. That is, the expansion material is generally low in rigidity, so that when the light weight stampable sheet shaped body made from a high expanded material having a small basis weight is incorporated into a vehicle body as an interior member for the automobile, it may become bent or broken. If the shaped body is not broken, there is a problem that a crease is formed in the skin at the bent portion.

On the contrary, there is widely known a light weight composite body formed by sticking a material having a high rigidity onto a surface of the light weight material to obtain a sandwich structural body for enhancing the rigidity of the material. According to such a light weight composite body, an improvement in rigidity as a result of the material laminated on the surface layer and a weight reduction as a result of the light weight core material can simultaneously be attained.

Such a light weight composite body of sandwich structure is applied even to the field of the interior members for automobiles. As a technique for solving the above problem, there has hitherto been proposed a laminated body of sandwich structure formed by using a thermoplastic resin foamed body as a light weight core material and laminating a resin sheet as a surface layer material having a high rigidity onto the surface of the core material. For example, there are proposed

①. a laminated body formed by using a foamed sheet of polystyrene resin as a light weight core material and laminating a resin reinforced sheet, obtained by impregnating inorganic fibers and an emulsion of styrene resin with an organic fiber nonwoven fabric onto each surface of the sheet as described in JP-B-3-52342;

②. a laminated body formed by using a foamed sheet of resin comprised of polyphenylene ether and styrene as a light weight core material and laminating a resin sheet comprised of polyphenylene ether and styrene onto each surface of the sheet as described in JP-A-6-344483;

③. a laminated body formed by using a foamed sheet of crosslinking-type thermoplastic resin as a light weight core material and laminating a composite sheet of thermoplastic resin film and glass paper onto the surface of the sheet as described in JP-A-7-1628;

④. a laminated body formed by using a glass fiber-reinforced thermoplastic resin foamed sheet as a light weight core material and laminating a two-dimensional oriented glass fiber-reinforced thermoplastic resin foamed sheet onto the surface of the sheet as described in JP-A-7-9462 and JP-A-7-16933.

However, all of the techniques proposed in the above items ①~③ use a foamed body of non-reinforced resin as the core material, so that it is difficult to use them in applications severely requiring dimensional stability during shaping. That is,

① the laminated body described in JP-B-3-52342 is difficult to use in applications severely requiring heat resistance and dimensional stability during shaping because the rigidity of the material is not so high and a foamed sheet of the polystyrene resin is used as a core material; has

②. The laminated body described in JP-A-6-344483 has excellent heat resistance but has insufficient dimensional stability during the shaping as in the case of item ①, so that it is difficult to use it in applications severely requiring dimensional stability during shaping;

③. the laminated body described in JP-A-7-1628 is high in rigidity and has excellent heat resistance and dimensional stability during shaping as compared with items ① and ②, but it is still difficult to use it in applications severely requiring dimensional stability during shaping because the foamed body of the resin itself is used as a core material.

Further, the laminated bodies described in JP-A-7-9462 and JP-A-7-16933 of the item ④ have high rigidity and excellent heat resistance and dimensional stability during shaping, but use a two-dimensional glass fiber-reinforced thermoplastic resin foamed sheet, so they have the drawbacks that the cost becomes uneconomically higher and the production steps become complicated.

Adhesiveness between substrate and skin and non-permeability

When a light weight stampable sheet shaped body provided with a skin for decoration is used as an interior member for an automobile, it is necessary and inevitable for there to be high adhesiveness between the substrate (core material) and the skin and for the skin laminated product to have a high degree of non-permeability.

However, the light weight stampable sheet shaped body is generally produced by integrally sticking the expansion sheet and the decorative skin by simple press-forming under heat without using an adhesive. In the case of simple skin sticking using no adhesive layer between substrate sheet and skin, therefore, sufficient adhesion strength can not be expected between the substrate and the skin. This is because the contact area between the expansion sheet having a large porosity and the skin is small and also the adhesion component during the sticking is only the thermoplastic resin existing on the surface layer of the expansion sheet. Furthermore, the light weight stampable sheet shaped body is shaped whilst maintaining the expanded state of the expansion sheet, so that the shaping pressure during the sticking is small and hence the migration of resin component from the interior of the expansion sheet to the surface thereof is less.

On the other hand, there have hitherto been proposed light weight stampable sheet shaped bodies formed by integrally uniting the substrate and the skin using an adhesive. For example, there have been proposed

①. a technique of improving the adhesiveness between the substrate and the skin by pressure-shaping at whilst inserting a hot-melt type adhesive film between the substrate and the skin as in JP-A-5-16274;

②. a technique of not only improving the adhesiveness between the substrate and the skin but also preventing the exudation of resin toward the skin surface by pressure-shaping whilst inserting an inorganic filler containing thermoplastic resin between the substrate and the skin as in JP-A-4-331137;

③. a technique of improving the adhesiveness between substrate and skin and the appearance at the skin side by pressure-shaping the skin laminated with a thermoplastic resin porous sheet onto the expansion sheet as in JP-A-5-16277;

④. a technique of producing a light weight composite body having an excellent skin adhesiveness by successively laminating thermoplastic resin film A / thermoplastic resin film B having a meltviscosity higher than that of the film A at the same temperature / adhesible thermoplastic resin C on at least one-side surface of a nonwoven mat mainly composed of inorganic fibers, melting under heating, impregnating the
molten resin into the nonwoven mat under compression, releasing the compression force to recover the thickness and then cooling to conduct solidification as in JP-A-3161335.

However, the techniques described in the above proposals have the following problems. That is,

①. according to the technique described in JP-A-5-16274, the adhesive film becomes very fluid during the pressure-shaping and penetrates into the gaps of the porous expansion sheet being the substrate and hence it does not remain between the substrate and the skin. Therefore, the adhesiveness between substrate and skin is insufficient and the non-permeability is poor. Material having such a poor non-permeability is likely to suffer from the problems that a required amount of pressure loss can not be ensured during the stick shaping (particularly vacuum shaping), that dropwise condensation is generated on a member to be provided with a skin stuck product thus facilitating corrosion of the member, and that the skin stuck product acts as a filter to contaminate the skin, and the like. In the light weight stampable sheet shaped body useful as an interior member for an automobile such as ceiling member, door trim member or the like, therefore, it is important to improve the non-permeability.

②. according to the technique described in JP-A-4-331137, the poor appearance (due to exudation of resin) and the adhesiveness can be improved to a certain level by adjusting the amount of the inorganic filler filled, but it is difficult to simultaneously improve the adhesiveness and the non-permeability.

③. according to the technique described in JP-A-5-16277, the fluidity of the thermoplastic resin porous sheet is poor and the contact area between the expansion sheet substrate and the porous sheet is small, so that the anchor effect of the porous sheet is not sufficiently developed and the adhesiveness between the substrate and the skin is still poor.

④. according to the technique described in JP-A-3161335 on which the preamble of claim one is based, the adhesiveness between the substrate and the skin can be improved to a certain level, but it is difficult to simultaneously improve the adhesiveness and the non-permeability.

Method of producing light weight stampable sheet shaped body provided with the skin

In the above JP-A-5-16274 there is proposed a method of producing a light weight stampable sheet shaped body provided with a skin by shaping so as to render the porosity of the substrate portion from 5 to 75% using a paper-making process. However, the technique of this proposal does not improve the rigidity, the adhesiveness between substrate and skin and the non-permeability.

EPA 476538 relates to a textile fibrous web consisting of two kinds of thermoplastic resin fibres. This document discloses a fibrous web having a decorative layer in its one or both surfaces which is introduced by compression shaping. A thermoplastic bonding agent of identical polymer material may be included on one or both sides of the web.

EPA 341977 discloses a composite material formed from a blend of glass fibre and thermoplastic and a method of uniformly dispersing glass fibre and fibrous thermoplastic resin without adding a dispersing agent. A dispersion agent is usually used for improving the dispersion of glass fibre. This document also discloses a preliminary shaped product which is formed from multiple layers of the glass fibre and resin composite.

Light weight stampable sheet shaped body as a shock absorbing part

Shock absorbing parts have been used in wide fields for many years. Particularly they are applied to automobile door trims for improving the shock absorption in side collisions. As such a door trim, there is known a structure where a substrate such as a thermoplastic resin shaped body is provided at its design face side with a decorative skin and at its non-design face side with a shock absorbing body of block or rib structure.

However, in such a door trim it is necessary to simultaneously satisfy the rigidity and shock absorbing property needed for use as an interior member for an automobile. The former structure has the problem that the thickness of the substrate in the interior member is increased and this increases the weight. The latter structure is more light weight than the former because the rib structure can integrally be united with the substrate resin portion, but the reduction in weight is still not sufficient. Also there are many restrictions on the rib form of the shaped face for the integral uniting and hence the reduction in weight and the shock absorbing property can not simultaneously be satisfied.

It is an object of the invention to solve various problems of the above conventional techniques and to develop paper-made stampable sheets exhibiting high rigidity and possessing adhesiveness and non-permeability.

It is another object of the invention to provide light weight stampable sheet shaped bodies exhibiting sufficient rigidity to be used in applications severely requiring dimensional stability during shaping.

It is another object of the invention to provide light weight stampable sheet shaped bodies exhibiting high rigidity and having excellent adhesiveness between substrate and skin and improved non-permeability.

It is a further object of the invention to provide light weight stampable sheet shaped bodies having excellent shock absorbing property in addition to the above properties.

It is a still further object of the invention to provide a technique for advantageously producing the above light weight stampable sheet shaped body.

According to the present invention, there is provided a fibre-reinforced composite sheet formed by piling a multilayer film onto a sheet-like web obtained by paper-making a mixture of a thermoplastic resin and reinforcing fibres, wherein the multilayer film is comprised of (A) a layer of a thermoplastic resin having a melt viscosity during compression shaping under heating larger than that of the thermoplastic resin constituting the web, and (B) a layer having a permeability of zero according to ASTM-D737 and the ability to adhere a decorative skin, wherein the multilayer film is piled on at least one surface of the web so as to locate the layer (A) nearest to the surface of the web, and wherein the sheet is heated above the melting point of the thermoplastic resin constituting the web and compressed and then cooled and solidified at a compressed state.

Preferred embodiments are defined in dependent claims 2-24. In claims 25 to 36 the method for producing such a fibre composite sheet is defined. Claims 26 to 36 define preferred embodiments of this method.

①. In the case where the thermoplastic resin of the web is fiber-shaped thermoplastic resin, the gaps between the reinforcing fibers are densified to improve the rigidity, whereby the mechanical properties of the light weight stampable sheet shaped body are largely improved. Particularly, when modified resin fibers are used as the thermoplastic resin, the fiber-shaped resins are entangled with each other even in the gap between the reinforcing fibers and also the modified resin is effectively added at the contact points between the reinforcing fibers, whereby higher mechanical properties are obtained as compared with the case of using particulate thermoplastic resin.

In a preferred embodiment therefore, the sheet-like web is a solidified sheet obtained by paper-making a mixture of thermoplastic resin and reinforcing fibers and heating the same above the melting point of the thermoplastic resin, compressing and cooling in the compressed state, wherein the thermoplastic resin is a fiber-shaped thermoplastic resin or a mixture of particulate thermoplastic resin and fiber-shaped thermoplastic resin with the ratio of the fiber-shaped thermoplastic resin in the thermoplastic resin being not less than 5 parts by weight based on 100 parts by weight of the total thermoplastic resin.

②. It has been found that when at least one surface of the web is laminated with a multilayer film including a first resin having a structure the same as or similar to that of the thermoplastic resin constituting the web and a melt viscosity more than that of the thermoplastic resin during the shaping under heating and compression to suppress the penetration of the resin film into the web during the heating and compression to form a laminate of a sandwich structure, a fibre-reinforced composite sheet (hereinafter referred to as a paper-made stampable sheet) having high rigidity and excellent non-permeability can be obtained. This paper-made stampable sheet is such that a dense layer is retained in the interior of the substrate surface layer of the shaped body even during the expansion shaping, and the dense layer serves as a rigidity improving layer and a non-permeable layer, whereby a light weight stampable sheet shaped body having a high rigidity and an excellent non-permeability can be formed. Furthermore, the film layer forms a smooth surface, which facilitates adhesion when sticking a skin having a hot melt layer. On the other hand, in the case of sticking a skin having no adhesion layer, such as a hot melt layer or the like, it has been found that the adhesiveness to the skin can be improved by further laminating a film having a low melting point.

③. Further, it has been found that the paper-made stampable sheet having a non-permeability higher than that of the above item ②can be obtained by laminating a thermoplastic resin first film, being the same as or similar to the thermoplastic resin constituting the web, and a high melting point resin second film forming a non-permeable layer on at least one surface of the web Moreover, the above film layers form a smooth surface similar to item ② so that it facilitates adhesion for sticking the skin provided with the hot melt layer. On the other hand, in the case of sticking a skin not provided with an adhesion layer, such as hot melt layer or the like, it has been found that the adhesiveness to the skin can be improved by further laminating a film of a low melting point.

The invention based on the above items ②and ③lies in (i) a paper-made stampable sheet obtained by laminating a multilayer thermoplastic resin film having non-permeability and adhesiveness on at least one surface of a sheet-like web paper-made from a mixture of a thermoplastic resin and reinforcing fibers, compressing under heating above the melting point of the thermoplastic resin constituting the web, and cooling and solidifying in the compressed state and (ii) a light weight stampable sheet shaped body produced from this sheet.

In a desirable embodiment, the multilayer film is a two-layer film made from a first resin layer having a structure the same as or similar to that of the thermoplasticresin constituting the web and a second resin layer made from a resin having a melting point higher than that of the thermoplastic resin constituting the web in which the first resin layer is laminated so as to be adjacent the surface of the web.

In another desirable embodiment, the multilayer film is a three-layer film made from a first resin layer having a structure the same as or similar to that of the thermoplastic resin constituting the web, a second resin layer made from a resin having a melting point higher than that of the thermoplastic resin constituting the web and a third resin layer having a melting point lower than that of the thermoplastic resin constituting the web in which the first rein layer is laminated so as to be located at the surface of the web.

④. It has been found that a paper-made stampable sheet having a high rigidity can be obtained by laminating a surface of the web with an organic fiber nonwoven fabric having a melting point higher than that of the thermoplastic resin constituting the web. Further, it has been found that a paper-made stampable sheet having improved rigidity, adhesiveness and non-permeability can be obtained by disposing the above organic nonwoven fabric between the multilayer film of the above items ②, ③and the web or on the outermost film layer to suppress penetration of the first resin layer of the multilayer film into the web. In this paper-made stampable sheet, a dense layer made from the organic fiber nonwoven fabric and the film is formed on the surface layer of the substrate in the shaped body even during expansion shaping, so that there can be formed a light weight stampable sheet shaped body having a high rigidity and excellent adhesiveness between substrate and skin and non-permeability.

Accordingly, in another embodiment, the paper-made stampable sheet is formed by laminating at least one surface of the sheet-like web paper-made from a mixture of thermoplastic resin and reinforcing fibers with an organic fiber nonwoven fabric having a melting point higher than that of the thermoplastic resin constituting the web, heating and compressing above the melting point of the thermoplastic resin constituting the web, and cooling and solidifying in the compressed state. As before, a light weight stampable sheet shaped body can be made from this sheet. It is desirable that the organic fiber nonwoven fabric is disposed between the sheet-like web and the multilayer film. It is also desirable that a single layer film made from a resin having a structure the same as or similar to that of the thermoplastic resin constituting the web is disposed between the sheet-like web and the organic fiber nonwoven fabric.

⑤. In an embodiment of the invention a light weight stampable sheet shaped body is obtained by disposing a shock absorbing body on at least a part of a non-design face which is not covered with the skin in the skin-stuck porous body to serve as a shock absorbing member giving shock absorbability to the aforementioned light weight stampable sheet shaped body.

⑥. In a further embodiment, the aforementioned light weight stampable sheet shaped body is obtained by a method wherein a substrate consisting of the paper-made stampable sheet expanded by heating and a skin are supplied to a pair of opened male and female molds which are then clamped and compressed to render the expansion thickness of the substrate to 40-80% so as to integrally unite the substrate and the skin to form the body.

BRIEF DESCRIPTION OF THE DRAWINGS

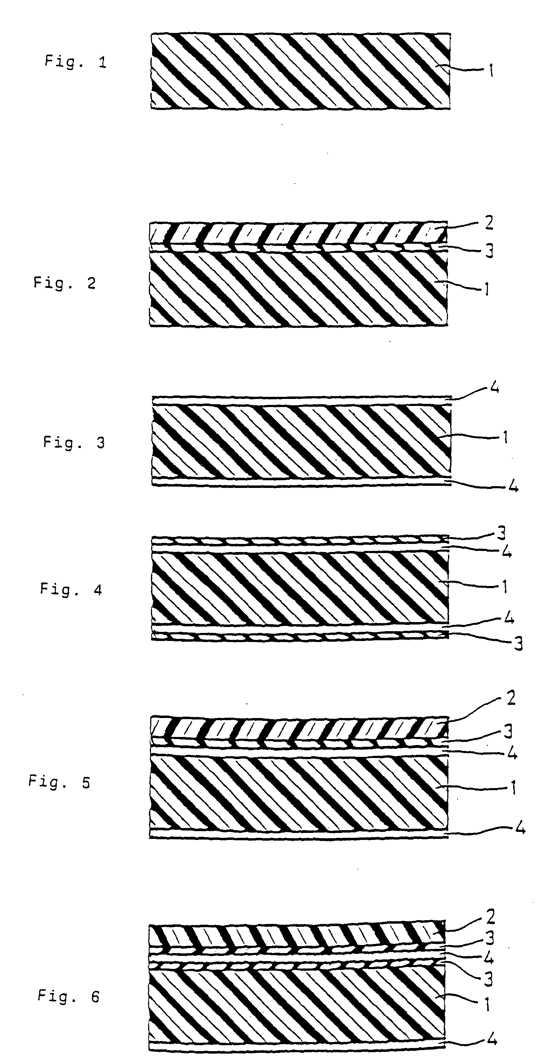

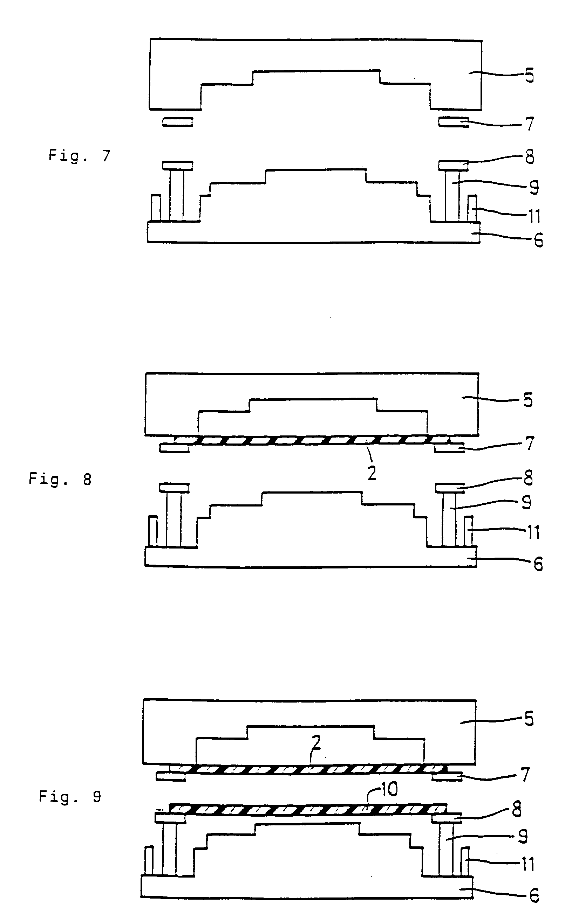

Fig. 1 to Fig. 6 are outline views illustrating sectional structures of various light weight stampable sheet shaped bodies. Fig. 7 is an outline view illustrating a section of a shaping mold used in the invention.

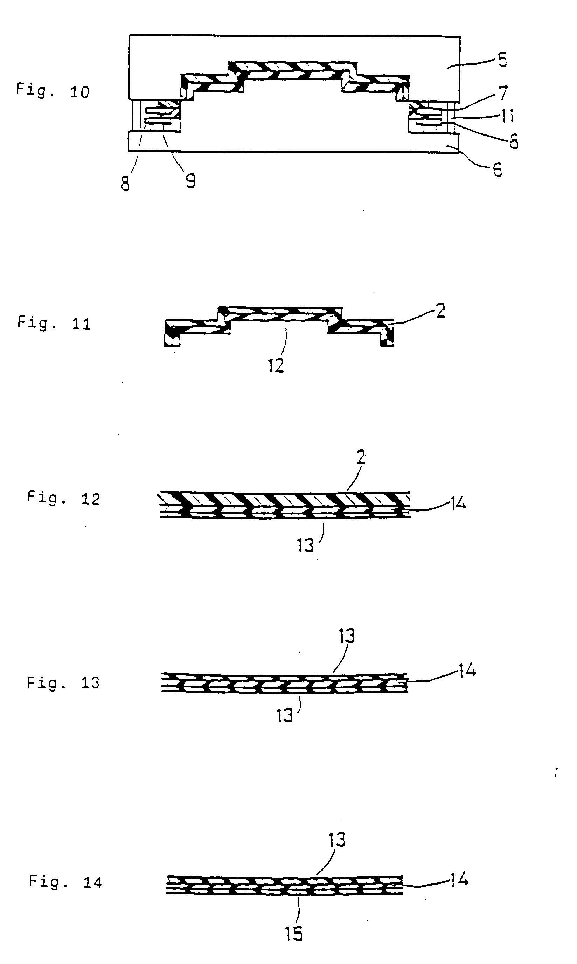

Fig. 8 to Fig. 10 are outline views of mold sections illustrating the production of a light weight stampable sheet shaped body according to the invention, and Fig. 11 is an outline view illustrating a section through the resulting light weight stampable sheet shaped body. Fig. 12 is a schematic sectional view illustrating an embodiment of the skin used in the production method according to the invention, and Fig. 13 and Fig. 14 are schematic sectional views of a sheet disposed between a skin and a heated sheet used in the production method according to the invention.

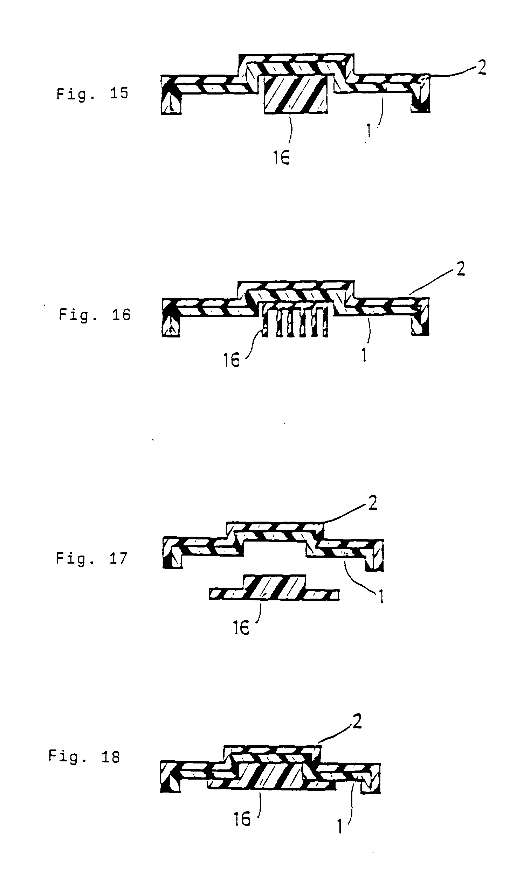

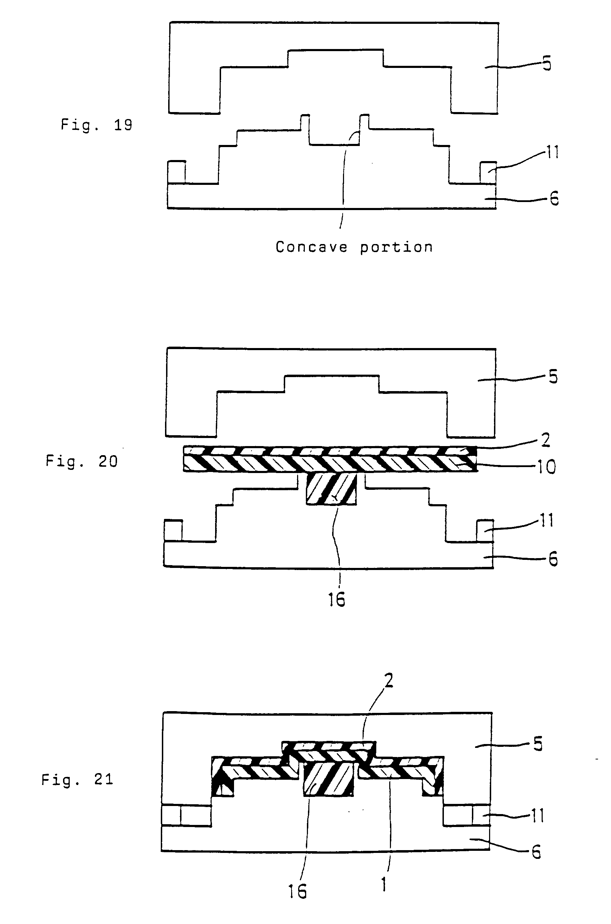

Fig. 15 and Fig. 16 are outline views illustrating a sectional structure of an embodiment of a light weight stampable sheet shaped body for use as a shock absorbing member according to the invention, respectively. Fig. 17 and Fig. 18 are sectional views illustrating the situation before and after adhesion between the substrate and the shock absorbing body, respectively. Fig. 19 is a schematic sectional view of an embodiment of a mold for producing a light weight stampable sheet shaped body in the form of a shock absorbing member according to the invention. Fig. 20 and Fig. 21 are schematic sectional views of the mold of Fig. 19 illustrating the production steps in the production of the light weight stampable sheet shaped body in the form of a shock absorbing member according to the invention, respectively.

In these figures, numeral 1 is an expanded paper made sheet-like web (hereinafter referred to as a substrate) numeral 2 is a skin, numeral 3 is a multilayer thermoplastic resin film, numeral 4 is an organic fiber nonwoven fabric, numeral 5 is a female mold, numeral 6 is a male mold, numeral 7 is a clamp frame for the skin, numeral 8 is a clamp frame for the substrate, numeral 9 is a sliding device for the clamp frame 8 for the substrate, numeral 10 is the substrate before the expansion shaping numeral 11 is a stopper, numeral 12 is the substrate (referred to hereinafter as the expansion sheet) after the expansion shaping, numeral 13 is a thermoplastic resin layer (molten resin layer) melted by the heat of the substrate, numeral 14 is a thermplastic resin layer not melted by the heat of the substrate, numeral 15 is a thermoplastic resin layer having a melting point lower than that of the resin of layer 13, and numeral 16 is a shock absorbing body.

BEST MODE FOR CARRYING OUT THE INVENTION

A first feature of the preferred paper-made stampable sheet according to the invention is that the thermoplastic resin, which is used to form the web with the reinforcing fibers, is fiber shaped.

Thus, the rigidity of the paper-made stampable sheet as well as the light weight stampable sheet shaped body made from this sheet can be improved. In this way, there can be provided a light weight stampable sheet shaped body having a rigidity sufficient to be used in applications requiring severe dimensional stability during shaping.

A second feature is that a multilayer film having excellent non-permeability and adhesiveness is laminated on the paper-made sheet-like web made from the thermoplastic resin and reinforcing fibers.

Thus, when the paper-made stampable sheet is heated and shaped under pressure (expansion shaped) and laminated with a decorative skin, if necessary, a light weight stampable sheet shaped body having excellent rigidity, non-permeability and adhesiveness between substrate and skin can be obtained as compared with the conventional light weight stampable sheet shaped bodies.

A third feature of the preferred paper-made stampable sheet according to the invention is that an organic fiber nonwoven fabric having a melting point higher than that of the thermoplastic resin constituting the web is laminated on the paper-made sheet-like web made from the thermoplastic resin and reinforcing fibers at a given position.

Thus, the organic fiber nonwoven fabric acts as a non-permeable layer for the paper-made stampable sheet or light weight stampable sheet shaped body produced therefrom and contributes to further improve the non-permeability.

The adhesiveness between substrate and skin is excellent irrespectively of the adhesiveness of the skin, and there can stably be provided a light weight stampable sheet shaped body constitued by the substrate and skin thus ensuring complete non-permeability.

Another feature of the preferred light weight stampable sheet shaped body according to the invention is that a shock absorbing body is disposed on at least a part of a nondesign face of the shaped body, which is not provided with the skin, to form a shock absorbing member.

This light weight stampable sheet shaped body can be used in applications requiring light weight and shock absorbability such as interior members for automobiles such as door trims or the like.

The structures of the paper-made stampable sheet and light weight stampable sheet shaped body according to the invention will be described in detail below.

As to the reinforcing fibers

As the reinforcing fiber of the substrate, use may be made of inorganic fibers such as glass fiber, carbon fiber, boron fiber, metallic fiber and the like; or organic fibers such as aramide fiber, polyester fiber, polyamide fiber, cellulose fiber and the like. Particularly, it is desirable to use glass fiber because the high reinforcing effect is obtained at a low cost.

The fiber length of the reinforcing fiber is desirably in a range of 5-30 mm, preferably 10-26 mm from the viewpoint that the reinforcing effect is excellent and the shapability during the paper-making step is ensured. When the fiber length is less than 5 mm, sufficient reinforcing effect is not obtained and breakage is apt to occur at the paper-making step. While, when the fiber length exceeds 30 mm, the reinforcing fibers are not sufficiently opened at the paper-making step and hence the expansion of the shaped body becomes non-uniform and the spring back effect is small. As a result, the expandability of the shaped body lowers and at the same time the shapability during shaping is degraded.

The fiber size of the reinforcing fiber is desirably in a range of 5-30 $\mu$m, preferably 10-25 $\mu$m from the viewpoint of the reinforcing effect of the fibers and the ensurement of the expansion effect. When the fiber size is less than 5 $\mu$m, sufficient expansion magnification is not obtained, while when it exceeds 30 $\mu$m, sufficient reinforcing effect is not obtained.

Further, when the reinforcing fibers are two kinds of glass fibers having different fiber sizes, if the amount of small size fiber added is W1wt% and the amount of large size fiber added is W2wt%, it is desirable that the value of W2/(W1 + W2) is 0.3-0.7. If the amount of large size fiber added is too much, the glass fiber sticks and causes pain during handling and also the hanging down or so-called drawdown is likely to cause undesirable contact with the heater or the like when both ends of the sheet are fixed by means of a clamp and heated during shaping. On the other hand, if the amount of small size fiber added is too much, the rigidity of the glass fiber itself is small and the expandability of the paper-made stampable sheet lowers. Therefore, the value of W2/(W1 + W2) is desirably in the range of 0.3-0.7 in order to facilitate the production of a light weight stampable sheet shaped body having excellent expandability and handling property.

These reinforcing fibers are subjected to a surface treatment with a coupling agent or a treatment with greige goods, if necessary.

Particularly, a treatment with a silane coupling agent may be carried out in order to improve the wettability and adhesiveness between the reinforcing fiber and the thermoplastic resin. As the silane coupling agent, use may preferably be made of coupling agents such as vinylsilanes, aminosilanes, epoxysilanes, methacrylsilanes, chlorosilanes and mercaptosilanes. The surface treatment of the reinforcing fibers with such a silane coupling agent is carried out by the conventionally known methods, e.g. a method wherein a solution of silane coupling agent is sprayed while agitating the reinforcing fibers, a method wherein the reinforcing fibers are immersed in the solution of the coupling agent, and the like. Moreover, the treating amount of the silane coupling agent is desirably in the range of 0.001-0.3 wt%, preferably 0.005-0.2 wt% relative to the reinforcing fibers. When the treating amount is less than 0.001 wt%, the improvement of the strength is small.

Furthermore, it is desirable that the reinforcing fibers are opened into single fibers in order to improve the rigidity and expandability of the paper-made stampable sheet. For this purpose, the reinforcing fibers may be subjected to a treatment with water-soluble greige goods, if necessary. As the greige goods, there are polyethylene oxide, polyvinyl alcohol and the like. The treating amount of the greige goods is desirably in the range of 0.03-0.3 wt%, preferably 0.05-0.2 wt% relative to the reinforcing fibers. When the treating amount exceeds 0.3 wt%, it is difficult to open the fibers at the paper-making step.

As to the thermoplastic resin

As the thermoplastic resin of the substrate, use may be made of polyolefinic resins such as polyethylene, polypropylene and the like; polystyrene, polyvinyl chloride, polyethylene terephthalate, polycarbonate, polyamide, polyacetal, copolymers composed mainly of these resins (e.g. ethylene-vinyl chloride copolymer, ethylene-vinyl acetate copolymer, styrene-butadiene-acrylonitrile copolymer and the like) or graft polymers thereof; thermoplastic elastomers such as EPM, EPDM and the like; polymer alloys and a blend of these resins. Among them, the polyolefinic resins such as polyethylene, polypropylene and the like are preferable, and the use of polypropylene is most favorable.

The weight mean molecular weight (hereinafter abbreviated as "Mw" simply) of the thermoplastic resin is desirably in the range of 50,000-700,000. When Mw is less than 50,000, the melt viscosity is low and the wettability and adhesiveness to the reinforcing fibers are improved but the resin becomes brittle and the mechanical properties of the paper-made and shaped fiber reinforced thermoplastic resin substrate become lower. While, when Mw exceeds 700,000, the fluidity in the paper-making lowers and the immersionability of the fibrer and the wettability at the contact point of the fibers are degraded and hence the mechanical properties of the substrate become lower.

As to the shape of the thermoplastic resin, use may be made of particulate, flake, fiber and the like. Preferably, in the case of particulate form, it is desirable to use resin particles having a particle size of 50-2000 μm. When the resin particle size is less than 50 μm, it is apt to cause troubles such as biting into the device and the like in the production of the web, while when the resin particle size exceeds 2000 μm, it is difficult to obtain a fiber reinforced thermoplastic resin substrate in which the reinforcing fibers are uniformly dispersed into the resin.

The thermoplastic resin may be used together with a resin modified with various compounds such as acid, epoxy and the like in order to improve the adhesiveness between the resin and the reinforcing fiber. For example, in the case of polypropylene, it may be modified with maleic acid, maleic anhydride, acrylic acid or the like, and it is favorable that it includes as a modifying group, an acid anhydride group or carboxyl group.

The modified resin desirably has a Mw of 20,000-200,000. When Mw is less than 20,000, the melt viscosity is low and the wettability of and adhesiveness to the reinforcing fibers are improved but the resin becomes brittle and the mechanical properties of the paper-made and shaped fiber reinforced thermoplastic resin substrate becomes lower. While, when Mw exceeds 200,000, the fluidity in the paper-making lowers and the immersionability of, and wettability at the contact point of, the reinforcing fibers are degraded and hence the mechanical properties of the substrate become lower.

In the case of modified resin, the amount of the modifying group is desirably in the range of 0.02-3.0 wt% (100 x weight of modifying group/weight of thermoplastic resin), preferably 0.05-2.0 wt%. When the amount of the modifying group is less than 0.02 wt%, the reaction with the silane coupling agent is insufficient and the improvement of the strength is small. While, when it exceeds 3.0 wt%, there are caused drawbacks such as brittleness of the thermoplastic resin, coloration of the sheet and the like. Moreover, when the thermoplastic resin is used together with the above modified resin, the fiber reinforced thermoplastic resin substrate may be produced by laminating and shaping webs each made from the respective resin, or the fiber reinforced thermoplastic resin substrate may be produced by previously melt-kneading these resins in an extruder or the like and then pulverizing, or by paper-making one of the resins coated with the other resin.

In the paper-made stampable sheet and light weight stampable sheet shaped body according to the invention, the mechanical strength is largely improved by melting and integrally uniting particulate thermoplastic resin and fiber-shaped thermoplastic resin. Especially, it is desirable that the fiber-shaped thermoplastic resin among the thermoplastic resins is a resin having a structure the same as or similar to that of the particulate thermoplastic resin. For example, in the case of using particulate and fiber-shaped thermoplastic resins, when polypropylene is used as the particulate thermoplastic resin, it is desirable that the fiber-shaped thermoplastic resin is the same polypropylene or has a structure similar to that of the polypropylene or a copolymer composed mainly of propylene and other different monomer or a modified resin in which a terminal group or a part of side chain in polypropylene is substituted with another functional group (e.g. COOH group).

In the case where a mixture of unmodified fiber-shaped thermoplastic resin and modified particulate thermoplastic resin is used, higher properties are obtained by optimizing the substrate strength and the amount of modified resin. When the fiber-shaped thermoplastic resin is a modified polypropylene, it can be subjected to the same treatment as in the case of particulate thermoplastic resin.

Among the thermoplastic resins, the fiber length of the fiber-shaped thermoplastic resin is desirably from 5-50 mm. When the fiber length is too short, the fibers are apt to fall out from the web at the paper-making step. On the other hand, when the fiber length is too long, the fiber-shaped thermoplastic resin is not sufficiently opened at the papermaking step and hence a non-uniform paper-made stampable sheet is obtained. Further, the fiber size is desirably from 5-30 $\mu$m, preferably 10-25 $\mu$m. When the fiber size is too small, the suction resistance becomes large at the paper-making step, which results in production troubles, while when the fiber size is too large, the effect of densifying the structure of the resulting paper-made stampable sheet is small.

As to the compounding ratio of reinforcing fibers and thermoplastic resin

In the invention, it is desirable that the compounding ratio of the reinforcing fibers and thermoplastic resin constituting the substrate is within a range of 10/90-70/30 as a weight ratio (fiber/resin). When the compounding ratio of the reinforcing fibers (content) is less than 10 wt%, a sufficient reinforcing effect from the reinforcing fibers can not be expected, while when the compounding ratio of the reinforcing fibers (content) exceeds 70 wt%, insufficient thermoplastic resin, which acts as a binder component, is present during the expansion and it is difficult to uniformly impregnate the resin into the contact points between the reinforcing fibers and hence the strength lowers.

As to the organic fiber nonwoven fabric

As the organic fiber nonwoven fabric which may be used in the invention, mention may be made of fabrics made by dry and wet processes, spunbond fabric obtained by melt-spinning a resin and directly rendering it into non-woven fabric, and the like. As the fiber constituting the nonwoven fabric, use may be made of melt-spun products from polyolefinic resins such as polyethylene, polypropylene and the like; resins such as polystyrene, polyvinyl chloride, polyethylene terephthalate, polycarbonate, polyacetal and the like; copolymers composed mainly of these resins (e.g. ethylene-vinyl chloride copolymer, ethylene-vinyl acetate copolymer, styrene-butadiene-acrylonitrile copolymer and the like) and grafted products thereof; thermoplastic elastomers such as EPM, EPDM and the like; polymer alloys or a blend of these resins; thermosetting resin fibers formed from phenol and the like; natural fibers such as pulp, cotton and the like; and a blend of these fibers. Especially, when polypropylene is used as the thermoplastic resin constituting the substrate, it is favorable to use an organic fiber nonwoven fabric made from a resin which does not melt within the pressure shaping temperature range of the web of 190-210°C (melting point is more than 10°C higher than that of the polypropylene) such as polyester resin or polyamide resin.

The organic fiber nonwoven fabric is desirably used in an amount of 10-100 g/cm$^2$. When the amount is less than 10 g/cm$^2$, the effect of improving the rigidity is small, while when it exceeds 100 g/cm$^2$, the amount of thermoplastic resin needed for sufficiently wetting the inside of the nonwoven fabric becomes too large and the weight of the stampable sheet shaped body becomes heavier.

As to the skin

The skin for decoration which may be included in the light weight stampable sheet shaped body according to the invention is properly selected in accordance with the intended purpose of the product such as applications of surface decoration, non-permeability, cushionability, heat insulation and the like but is required to have heat resistance for preventing the melting or breaking through of the thermoplastic resin of the heated paper-made stampable sheet during the shaping step.

As to the skin, use may be made of woven fabrics made from natural and synthetic fibers as a starting material, organic fiber nonwoven fabric formed by needle punching or the like, raised fabric, knitted goods, flocked fabric and the like. Particularly, thermoplastic resin sheets of PVC (polyvinyl chloride), TPO (thermoplastic olefin), thermoplastic polyester, elastomer or the like, and laminates of this sheet with a base fabric or a resin foamed body such as polypropylene, polyethylene, polyvinyl chloride, polyurethane or the like; or the above decorative skins themselves, and stuck products with a backing material thereof or laminate thereof with a resin foamed body such as polypropylene, polyethylene, polyvinyl chloride, polyurethane or the like are used in applications for the interior of automobiles. Further, there may be used an assembly of the skin and a hot melt. In this case, it is desirable that a hot melt having good affinity and adhesiveness with the following film resin component to be used is selected from hot melts such as polyamide, modified polyolefin, urethane and polyolefin. Furthermore, the surface of these skins may be subjected to the formation of uneven patterns by embossing or the like or they may be printed.

<u>As to the structure of the multilayer film</u>

Examples of suitable multilayer films are as follows : -

①A two-layer film constructed with a first resin made from a resin having a structure the same as or similar to that of the thermoplastic resin constituting the web and having a melt viscosity more than that of the thermoplastic resin during the heating and shaping under compression and a second resin layer made from a resin having a melting point higher than that of the thermoplastic resin constituting the web.

The second resin layer forms a non-permeable layer without melting after the heating and shaping under compression and acts to more improve the non-permeability of the light weight stampable sheet shaped body. However, it is desirable for the resin layer to have an elongation such as not to obstruct the shapability to the sheet during the expansion shaping. As the resin of the second resin layer, it is desirable to use a resin having a melting point more than 10°C higher than the melting point of the thermoplastic resin constituting the web. For example, use may be made of polyolefinic resins such as polyethylene, polypropylene and the like; polystyrene, polyvinyl chloride, polyethylene terephthalate, polycarbonate, polyamide, polyacetal and copolymers composed mainly of these resins (e.g. ethylene-vinyl chloride copolymer, ethylene-vinyl acetate copolymer, styrene-butadiene-acrylonitrile copolymer and the like) and grafted product thereof; thermoplastic elastomers such as EPM, EPDM and the like; polymer alloy, or a blend of these resins. Particularly, when polypropylene is used as the thermoplastic resin constituting the web, it is favorable to use a resin which does not melt within a pressure shaping temperature range of web of 190-210°C (melting point is more than 10°C higher than that of polypropylene) such as a polyamide resin.

②A three-layer film constructed with a first resin layer made from a resin having a structure the same as or similar to that of the thermoplastic resin constituting the web, a second resin layer made from a resin having a melting point higher than that of the thermoplastic resin constituting the web and a third resin layer made from a resin having a melting point lower than that of the thermoplastic resin constituting the web.

The third resin layer is a film layer useful when a skin having no adhesiveness is used and acts as an adhesion layer to the skin. For this purpose, it is made from a resin having a melting point lower than that of the thermoplastic resin constituting the web and has no other restriction. For example, use may be made of polyolefinic resins such as polyethylene, polypropylene and the like; polystyrene, polyvinyl chloride, polyethylene terephthalate, polycarbonate, polyamide, polyacetal and copolymers composed mainly of these resins and grafted products thereof; thermoplastic elastomers such as EPM, EPDM and the like; polymer alloy, or a blend of these resins.

Moreover, the above two-layer or three-layer films may be produced by conventionally known methods. For example, the formation of the multilayer film can be carried out by a dry laminate method or co-extrusion method.

Further, the above multilayer films may be produced by laminating each single layer constituting the multilayer film on the web and integrally uniting them under heating and compression in the production of the paper-made stampable sheet.

Also, it is possible to provide a thin adhesion layer between the layers of the multilayer film to further improve the adhesiveness.

A method of producing a paper-made stampable sheet and a light weight stampable sheet shaped body according to the invention will be described below.

(1) At first, the reinforcing fibers such as chopped strands of glass fibers and the particulate or fiber-shaped thermoplastic resin are dispersed in an aqueous solution of a surfactant containing dispersed fine bubbles of air. As the surfactant, sodium dodecylbenzene sulfonate and the like are preferably used.

(2) Then, the resulting dispersion is dehydrated by means of a porous support to deposit the solid content of the dispersion, which is then dried to obtain a uniform web. The web is comprised of the reinforcing fibers, the thermoplastic resin and the like. When particulate thermoplastic resin is used the particles are uniformly dispersed in the reinforcing fibers. The thickness of the web is desirably 1-10 mm.

(3) Next, the multilayer film is laminated on one or both surfaces of the web. The resultant laminate is heated to a temperature of not lower than the melting point of the thermoplastic resin but lower than the decomposition point thereof to fuse the resin and pressure is applied between cooling plates to obtain a densely solidified paper-made stampable sheet.

When the thermoplastic resin is polypropylene, the web is heated to a temperature of 170-230°C, preferably 190-210°C. If the heating temperature is lower than 170°C, the fusion of the resin is insufficient resulting in a lowering of strength, while when it exceeds 230°C, coloration due to decomposition and lowering of strength are caused. Further, the pressure between the cooling plates is desirably within a range of 3-50 kgf/cm$^2$ for obtaining the dense paper-made stampable sheet. When the pressure exceeds 50 kgf/cm$^2$, breakage of the reinforcing fiber such as glass fiber or the like is apt to be caused, while when the pressure is less than 3 kgf/cm$^2$, the wetting of the reinforcing fibers such as glass fibers or the like with the thermoplastic resin is insufficient and lowering of strength is apt to be caused.

Moreover, the paper-made stampable sheet may be compounded with additives such as antioxidants, light stabilizing agents, metal deactivating agents, flame retardants, carbon black, magnesium silicate and the like, coloring agents and so on. These additives and coloring agents may be included into the paper-made stampable sheet by previously including them with the particulate thermoplastic resin or by coating thereon, or by a method involving addition by spraying or the like during the production step of the paper-made stampable sheet.

(4) The thus obtained paper-made stampable sheet (laminated sheet) is then reheated to a temperature above the melting point of the constituting resin, and a skin is laminated on the expanded sheet in the case where a skin stuck product is desited. It is then placed in a shaping mold, and the height of the mold spacer, or the clamping height of the press or the like is adjusted. Thereafter it is integrally united by shaping under pressure to obtain a light weight stampable sheet shaped body having given thickness and density.

The heating temperature in the expansion shaping may properly be selected within a temperature range of not lower than the melting point of the thermoplastic resin constituting the paper-made stampable sheet but lower than the decomposition point thereof. For example, when the thermoplastic resin is polypropylene, the heating temperature is 170-250°C, preferably 190-210°C. The heating method for the paper-made stampable sheet is not particularly restricted, but may be platen heating, far-infrared ray heating, ventilation heating or the like. Further, the mold temperature should be not higher than the solidification point of the thermoplastic resin and is usually within a range of room temperature to 60°C from the viewpoint of handling and productivity. The shaping pressure differs in accordance with the product shape, but is usually in a range of 1-50 kg/cm$^2$ because excessive pressure breaks the reinforcing fibers.

The density of the thus obtained light weight stampable sheet shaped body is controlled by the clearance of the mold and is smaller than the theoretical density ($\rho$), preferably not more than 0.8 g/cm$^3$, more particularly not more than 0.7 g/cm$^3$. Here, the theoretical density ($\rho$) is the density when the porosity is zero and is determined according to the following equation:

$$\rho = 100/(W_m/\rho_m + W_r/\rho_r)$$

$W_m$: weight fraction of thermoplastic resin
$W_r$: weight fraction of reinforcing fiber
$\rho_m$: density of thermoplastic resin
$\rho_r$: density of reinforcing fibers.

Further, the expansion magnification of the light weight stampable sheet shaped body is 1.1-15 times, preferably 1.5-10 times. When the expansion magnification is too large, if the applied amount is large, the temperature difference between the surface and the interior during the heating becomes large and uniform heating is difficult. This causes non-uniformity of the thickness. While, when the expansion magnification is too small, the effect of weight reduction at the required thickness is less. The term "expansion magnification" used herein means the value obtained by dividing the thickness of the expanded body (light weight stampable sheet shaped body) by the theoretical thickness (thickness when the porosity is zero).

As mentioned above, when producing the light weight stampable sheet shaped body of the invention, it is particularly proposed to use a production method useful for obtaining light weight stampable sheet shaped bodies having improved adhesiveness between the skin and the substrate by expansion shaping the paper-made stampable sheet used as a starting material. According to this proposal, when the stampable sheet according to the invention is used as the starting material for the expansion shaping, there can be obtained a light weight stampable sheet shaped body having not only improved adhesiveness between skin and substrate but also improved rigidity and non-permeability.

This production method for the light weight stampable sheet shaped body according to the invention will be concretely described with reference to Fig. 1 - Fig. 14.

In the production method there are used a female mold 5 and a male mold 6, wherein either one or both of these molds is provided with a press device and both the molds are openable.

(1) Both the molds are first at an opened state and a skin 2 and a paper-made stampable sheet 10 expanded by heating (hereinafter referred to as a heated sheet simply) are arranged one above the other between the female and male molds. The heating of the paper-made stampable sheet according to the invention means that it is heated to a temperature of not lower than the melting point of the thermoplastic resin but lower than the decomposition point thereof.

In this case, the heated sheet 10 may be directly placed on the surface of the lower mold (male mold in the figure) and the skin 2 may be directly placed thereon, or an end of the heated sheet 10 may be held by a stretchable clamp frame 8, for the paper-made stampable sheet, disposed on the outer periphery of the male mold and an end of the skin 2 may be held by a clamp frame 7, for the skin, capable of holding the skin at a parting face of the upper mold (female mold in the figure) or they may be held by both frames, respectively.

Particularly, in the case of producing a shaped body of a complicated form, it is preferable that the skin 2 and the heated sheet 10 are held by the respective clamp frames 7, 8 and the holding force and the sliding in the clamping are adjusted at respective positions in accordance with their forms.

In Fig. 7 there is shown the outline of the molds and both the clamp frame 7 for the skin and the clamp frame 8 for the paper-made stampable sheet. The clamp frame 8 for the paper-made stampable sheet works together with a sliding device 9 capable of expanding and contracting in the opening and closing directions of the mold. Further, if the clamp frame 7 for the skin is to be held at the parting face of the female mold, the frame is optional and an adhesive tape or the like may be used instead.

As to the supply order of the skin and the heated sheet to the space between the molds, if the clamp frame 7 for the skin is used, the supply of the heated sheet is naturally preferential, while if the clamp frame 7 for the skin is not used, it is general that, as shown in Fig. 8, the skin is supplied prior to the supply of the heated sheet in order to prevent the cooling of the heated sheet before the shaping as far as possible.

In the former case, it is possible for the skin to be placed on the heated sheet outside the mold and for both to be supplied between the molds as they are.

The heating of the paper-made stampable sheet used as shaping material differs in accordance with the kind of reinforcing fibers in the sheet and the thermoplastic resin in the matrix and the like. When the heating temperature is too low, sufficient expandability is not obtained and the adhesiveness to the skin is poor, so that it is necessary to conduct the heating at least above the melting point of the matrix resin.

However, when the heating temperature is too high, thermal deterioration of the matrix resin is caused and also handling is difficult. For example, when glass fibers are used as the reinforcing fiber and polypropylene is used as the matrix resin, the heating temperature is usually about 170-230°C.

(2) After the heated sheet and skin are supplied between the molds (see Fig. 9), the clamping is started and then completed at a position where the thickness of the heated sheet is reduced to 40-80% (see Fig. 10).

The completion of the clamping can be carried out by various methods such as by controlling the clamping completion position of the press machine fixed to the mold. However it is preferred to use a stopper 11 previously set to a given position thereby avoiding the need for an expensive control device.

(3) After the completion of the clamping, the molds are cooled and then opened in order to take out the shaped body comprising a substrate layer formed from the paper-made stampable sheet used as shaping material expanded by at least 2 times (hereinafter referred to as expansion sheet 12) with the skin integrally and strongly bonded to the surface thereof (see Fig. 11).

Thus, there is produced a shaped body obtained by integrally and strongly bonding the skin to the surface of the expansion sheet 12. In this case, when the skin has a net-shaped structure such as nonwoven fabric or the like, the adhesiveness is more improved through an anchoring effect, while when the skin is made from a material the same as or similar to the matrix resin of the paper-made stampable sheet, the skin is directly heat-fused to the surface of the sheet, so that the adhesion effect is more excellent. It is preferable to use such a skin.

Furthermore, good adhesiveness and rigidity are obtained by using a paper-made stampable sheet expanded to not less than 5 times by the heating.

Moreover, according to the invention, it is very effective to use a composite skin laminated at its back surface with a thermoplastic resin layer fused thereto by the heat of the heated sheet (hereinafter referred to as a fusion resin layer 13). This further improves the adhesiveness between the skin and the substrate.

The fusion resin layer may be laminated on the back surface of the skin with an adhesive or the like, or may be laminated by a fusion process.

In another method, the expansion shaping may be carried out by interposing a thermoplastic resin film (13) and fusing it by the heat of the heated sheet (hereinafter referred to as fusible film) between the skin and the heated sheet. In this case, the fusible film (13) may be placed on the heated sheet and the skin placed thereon, or the fusible film (13) may be simply piled on the back surface of the skin without lamination, with both then being placed on the heated sheet as they are. In any case, the fusible sheet (13) is melted between the skin and the substrate by the heat of the heated sheet during the expansion shaping and heat-fused thereto, whereby both are more strongly adhered to each other through the fusible film (13).

In the shaped body obtained by the above methods, when the shin is a woven fabric, nonwoven fabric or like permeable material, the shaped body itself has permeability. Even when using a skin having such a permeability, as shown in Fig. 12, a thermoplastic resin layer 14, which is not fused by the heat of the heated sheet, may be laminated on the back surface of the skin and further the fusion resin layer 13 may be laminated on the outside thereof. In this way the skin layer is strongly heat-fused to the substrate by the fusion resin layer to further improve the adhesion force.

Expansion shaping may be carried out by using the skin laminated at its back surface with the thermoplastic resin layer 14, which is not fused by heat of the heated sheet, and interposing the fusible film (13) between such a skin and the heated sheet.

As another method, a similar effect can be obtained even by using a film of three-layer structure wherein fusion resin layers 13 are laminated on both surfaces of the thermoplastic resin layer 14, which does not fuse with the heat of the heated sheet, as a middle layer and interposing such a three-layer sheet between the skin and the heated sheet to conduct expansion shaping as shown in Fig. 13.

In this case, it is not required to previously laminate the thermoplastic resin layer 14, which is not fused by heat of the heated sheet, on the back surface of the skin, and the skin 2 and the substrate are simultaneously bonded to both surfaces of the resin layer 14 as a middle layer by means of the fusion resin layer 13 during the expansion shaping.

In any one of the methods, the skin 2 and the expansion sheet 12 are strongly adhered through the fusion resin layer 13 and the thermoplastic resin layer 14, which is not fused by the heat of the heated sheet, is left between the expansion sheet and the skin as it is, whereby a non-permeable effect can be obtained. Further, the thermoplastic resin layer is formed on the surface of the resulting expansion sheet used as a substrate, so that there is also obtained improved strength.

In these methods, it is preferred that the thermoplastic resin in the fusion resin layer fusing by the heat of the heated sheet or the fusible film (13) is a thermoplastic resin having a melting temperature lower by 20-80°C than the surface temperature of the heated sheet for easily fusing by the heat of the heated sheet during the expansion shaping.

Although the above describes an example of conducting the expansion shaping using a film of three-layer structure wherein the fusion resin layers 13 are laminated onto both surfaces of the thermoplastic resin layer 14 which does not fuse with the heat of the heated sheet, as a middle layer and by interposing the three-layer film between the skin and the heated sheet, the same effect as described above can be obtained by conducting the expansion shaping using a film obtained by laminating a resin layer 15, made from a thermoplastic resin having a melting temperature lower by 10-50°C than that of the thermoplastic resin forming the film, on one-side surface of the fusion resin layer 13, made from a thermoplastic resin having a melting temperature lower by 20-80°C than the surface temperature of the heated sheet, by adjusting the thickness of the fusion resin layer and then supplying the resin layer 15 and the fusion resin layer 13 between the skin and the heated sheet so as to locate the resin layer 15 nearer the skin and the fusion resin layer 13 nearer the heated sheet.

This method utilizes the heat gradient in the thickness of the sheet when the fusion resin layer 13 contacts with the heated sheet, in which the surface portion of the fusion resin layer located near to the heated sheet is melted by the heat of the heated sheet and becomes strongly heat-fused to the substrate, while the surface portion of the fusion resin layer located near to the resin layer 15 is not melted, but the resin layer 15 contacted therewith and having a low melting temperature is melted and heat-fuses the skin and the fusible film. Hence the skin and the substrate are strongly bonded while leaving a part of the fusion resin layer 13 as it is to form a resin layer.

The same effect as mentioned above can be obtained by carrying out the expansion shaping using a three-layer film obtained by laminating the fusion resin layer 13, made from a thermoplastic resin having a melting temperature lower by 20-80°C than the surface temperature of the heated sheet, onto a surface of the thermoplastic resin layer 14, which is not fused by the heat of the heated sheet, and the resin layer 15, made from a thermoplastic resin having a melting temperature lower by 10-50°C than that of the thermoplastic resin forming the film, onto the other surface thereof. The resulting three-layer film is supplied between the skin and the heated sheet so as to locate the resin layer 15 nearer to the skin and the fusion resin layer 13 nearer to the heated sheet as shown in Fig. 14.

The thickness of each of the films used herein is properly selected to be an optimum thickness in accordance with the aforementioned purposes or by considering the contacting time between the heated sheet and the skin or the like, but it is usually not more than 150 μm.

Further, the material of these films varies in accordance with the heating temperature of the paper-made stampable sheet used as shaping material, but is selected from the films having the above temperature properties in accordance with the respective conditions.

Thus, light weight stampable sheet shaped bodies can be obtained having high porosity, excellent weight reduction, high strength and strong adhesion of the skin, and also non-permeability.

It is possible that, sometimes, the reinforcing fibers constituting the substrate may rise up on the surface of the light weight stampable sheet shaped body opposite to the surface provided with the skin. In order to prevent such a rise, it is very effective to use as the shaping material a paper-made stampable sheet previously subjected to a treatment for preventing the rise of the fibers.

The treatment for preventing the rise of the fiber can easily be carried out by laminating, for example, a nonwoven fabric, a thermoplastic film or the like on the appropriate surface of the paper-made stampable sheet. In the production of the paper-made stampable sheet, such a treatment is generally carried out by heating and pressing the nonwoven material to uniformly disperse the reinforcing fibers and the thermoplastic resin within the nonwoven fabric or the thermoplastic film or the like.

The nonwoven fabric used in the prevention of fiber rise is not particularly restricted, but polyester nonwoven fabric having a weight of about 10-50 $g/m^2$ or the like is preferably used. Further, the thermoplastic resin film is not particularly, restricted provided it does not become fused or broken during the heating of the paper-made stampable sheet when carrying out the expansion shaping according to the invention. It may be the same as the aforementioned thermoplastic resin layer 14 which is not fused by the heat of the skin or the heated sheet.

Especially, when a thermoplastic resin film is used for preventing the rise of the fiber, a non-permeable layer is formed on the substrate. In particular, when the thermoplastic resin layer 14, which is not fused by the heat of the heated sheet, is also present on the side nearer the skin, nonpermeable layers are formed on both surfaces of the substrate, whereby a shaped body having excellent air insulation property can be obtained.

As mentioned above, according to the production method of the invention, a light weight stampable sheet shaped body having a skin strongly adhered and having excellent weight reduction and rigidity is easily obtained, and also the substrate layer may easily be rendered into a nonpermeable structure. As a result, it is possible to widely use the resulting shaped body in various applications, particularly as interior members for automobiles such as ceiling members, door trims and the like as the shaped product is light in weight and high in rigidity and has excellent adhesiveness between the skin and the substrate and nonpermeability.

Now an example of using a light weight stampable sheet shaped body according to the invention as a shock absorbing member such as a door trim or the like will be described concretely with respect to Fig. 15 to Fig. 21.

Fig. 15 shows a sectional view of an embodiment of a light weight stampable sheet shaped body according to the invention, which is comprised of a substrate 1 made from fiber reinforced thermoplastic resin layer having a porosity of not less than 50% and a skin 2 provided on its design side surface and a shock absorbing member 16 made from a thermoplastic resin foamed body or the like partially arranged on the non-design face. Fig. 16 shows another embodiment of a light weight stampable sheet shaped body according to the invention, in which a rib, made from a thermoplastic resin, serving as a shock absorbing member 16 is integrally united with the substrate 1.

In the light weight stampable sheet shaped body for use as a shock absorbing product according to the invention, the substrate should be a fiber reinforced thermoplastic resin layer having a porosity of not less than 50% from the viewpoint of strength and weight reduction. This resin layer can easily be obtained from the paper-made stampable sheet according to the invention. That is, the resin layer can easily be produced by rendering the paper-made stampable sheet into a desired form by expanding under heating in the thickness direction so as to have a desired porosity, or by an expansion shaping method in which the sheet is expanded under heating in the thickness direction so as to have a porosity above a given porosity and again shaped under pressure compression while holding the heated state to provide the desired porosity and desired shape. In general, the latter expansion shaping method is adopted in view of the good shapability.

The skin is usually adhered to that side of the paper-made stampable sheet not adhered to the thermoplastic resin film, and the shock absorbing member is disposed on the side adhered to the film. According to this structure, the nonpermeability is imparted to the substrate by the film and the rise of fibers on the surface not provided with the skin can be prevented.

Further, in the case where the paper-made stampable sheet is adhered at both sides to thermoplastic resin films, the rise of the reinforcing fibers on the non-design surface of the substrate is prevented and the adhesiveness between the skin and the substrate is improved and further the rigidity of the substrate is improved. Thus further improvement is obtained to the rigidity of the light weight stampable sheet shaped body and the resulting shock absorbing product.

The film may be laminated with the paper-made stampable sheet by heating under pressure during the expansion shaping at the laminated state of the substrate.

Moreover, the treatment for preventing the rise of the reinforcing fibers can be carried out by laminating a nonwoven fabric such as polyester nonwoven fabric having a weight of about 10-50 $g/m^2$ on the side of the substrate not provided with the skin in addition to laminating the above resin film.

The skin may be adhered to the previously shaped substrate with an adhesive or the like, but it is favorable that the skin is integrally united with the substrate at the same time of shaping in the production step of the light weight stampable sheet shaped body through the expansion shaping of the paper-made stampable sheet. In this case it is necessary for the skin to have heat resistance so as not to fuse or break during the heating step in the expansion shaping. In the latter case, the skin is preferably a material having a good adhesiveness through heat fusion to the substrate such as a thermoplastic resin which is the same as or similar to the matrix resin of the paper-made stampable sheet used to form the substrate or the thermoplastic resin film adhered onto the surface of the sheet. When the skin itself is poor in adhesiveness to the matrix resin or to the thermoplastic resin film, the adhesiveness can be improved by previously laminating the back surface of the skin with a resin film having an excellent adhesiveness to these resins. Furthermore, adhesion can be attained depending on the kind or thickness of the skin, by the anchor effect of the reinforcing fibers rising on the surface of the substrate entering the thermoplastic resin layer constituting the skin or through the anchor effect of the matrix resin in the substrate when the skin is a porous woven fabric or knitted fabric or the surface of the skin is fibrous.

If nonpermeability is required in the light weight stampable sheet shaped body, a non-permeable skin is used. If this skin has excellent adhesiveness to the substrate, it is not particularly required to previously adhere the thermoplastic resin film on either or both surfaces of the substrate. In case of a permeable skin, the paper-made stampable sheet adhered with the thermoplastic resin film is used, or a skin laminated at its back surface with a non-permeable film may be used.

The light weight stampable sheet shaped body for use as a shock absorbing member according to the invention is formed by adhering the above skin 2 on the design face of the substrate 1 and laminating and uniting the shock absorbing body 16 on at least part of the non-design forming the back surface of the substrate.

The material of the shock absorbing body is selected from various conventionally known shock absorbing materials in accordance with the purpose of use but a fiber reinforced thermoplastic resin shaped body having a porosity of not less than 65 volume%, a thermoplastic resin foamed body having closed cells or a ribbed body made from a thermoplastic resin is preferably used.

The fiber reinforced thermoplastic resin shaped body having a porosity of not less than 65% can easily be produced according to the production of the paper-made stampable sheet applied to the invention. It may be made from a material which is the same as or different from the paper-made stampable sheet forming the substrate and has naturally a thickness different therefrom. The constituting material and thickness are properly determined so as to meet the required shock absorbability.

As to the thermoplastic resin foamed body having closed cells, conventionally well-known foamed bodies are used but a polypropylene bead foamed body having rich weight reduction and high shock absorbability is preferably used.

Further, when the shock absorbing body is made from a thermoplastic resin shaped body, it is usually used as a columnar or hollow rib structural body in the case where the shock absorbing product is to serve as an interior member for an automobile such as a door trim or the like.

Such a shock absorbing body may be arranged over the full non-design surface or back surface of the substrate not adhered with the skin, but is usually arranged on a part of the back surface. The shape, size, arranging position, arranging number and the like are properly determined in accordance with the purpose of use, the condition of use and the like and are not particularly restricted.

For example, the shock absorbing body may take a most effective form and size considering the weight reduction, shock absorbability, adaptability to another part, shapability and the like and may be in the form of a block, pipe, unevenness, comb or the like.

As to the integral uniting of the shock absorbing body with the substrate, the shock absorbing body previously shaped into a desired form may be adhered to the shaped substrate with an adhesive or through heat fusion, or when the heat fusability between the shock absorbing body and the substrate is excellent, the shock absorbing body may be integrally united with the substrate during the shaping of the substrate. The latter method is advantageous in view of the cost.

When using a shock absorbing body of rib structure, the rib structural body previously shaped into the desired form may be adhered after the shaping of the substrate, or it may be integrally united at the same time as substrate shaping.

Further, the substrate adhered with the skin may be shaped by using a mold designed so as to provide the desired form of the shock absorbing product, and thereafter the ribbed portion may be formed by supplying molten thermoplastic resin to a rib-forming portion of the mold and simultaneously united with the previously formed substrate.

The light weight stampable sheet shaped body used as the shock absorbing product according to the invention can easily be produced by laminating the skin on the design face side of the paper-made stampable sheet as a substrate and laminating and integrally uniting the shock absorbing body on at least a part of the non-design face side thereof according to the aforementioned optional method. Preferably, the skin is desirably laminated and adhered to the design face of the substrate at the same time as at least the substrate shaping.

According to this method, there is utilized a method of adhering the skin at the same time as the expansion shaping of the paper-made stampable sheet. In this case, the porosity of the paper-made stampable sheet itself is not so important, but the porosity when the sheet is heated and expanded above the melting temperature of the matrix resin, should be not less than 50 volume%, preferably 80 volume%.

A typical production example using such methods will be described below.

One method is a method of integrally uniting the substrate and the previously formed shock absorbing body in separate steps.

In this method, an upper mold 5 and a lower mold 6 having cavity faces of a steric form corresponding to the form of the desired light weight stampable sheet shaped body without the shock absorbing body (see Fig. 7) are used, and a skin 2 and a paper-made stampable sheet 10 previously expanded under heating above the melting temperature of the matrix resin in a far-infrared ray heating furnace or the like and having a porosity of not less than 50 volume% are supplied between the open molds so as to pile one upon the other (see Fig. 9), and thereafter both the molds are clamped to a desired thickness while maintaining the porosity of the sheet above 50 volume% to adhere and integrally unite the skin and the sheet with each other utilizing the heat of the heat expanded sheet and clamping pressure to render the substrate and skin into a desired form (see Fig. 10). After cooling, the substrate provided with the skin is taken out (see Fig. 11) and adhered and integrally united with a separately formed shock absorbing body 16 through an adhesive or the like at a given position on the substrate (see Fig. 17 and Fig. 18).

Another method is a method of integrally uniting the substrate and the previously formed shock absorbing body in one step.

According to this method, there are used an upper mold 5 and lower mold 6 having cavity faces of a steric form corresponding to the form of the desired light weight stampable sheet shaped body (see Fig. 19). With the molds open, the shock absorbing body 16 is housed in a concave portion of the mold cavity face for housing the shock absorbing body, and the paper-made stampable sheet 10, previously expanded under heating above the melting temperature of the matrix resin in a far-infrared ray heating furnace or the like so as to have a porosity of not less than 50 volume%, and the skin 2 are piled one upon the other thereon (see Fig. 20), and thereafter both the molds are clamped to a desired thickness while holding the porosity of the sheet at not less than 50 volume% to adhere and integrally unite the skin and the sheet utilizing the heat of the sheet and clamping pressure to render the substrate made from the sheet into a desired form and to simultaneously unite the shock absorbing body 16 with the substrate 1 by the heat of the sheet 10 (see Fig. 21).

Among these methods, the latter method is advantageous in industry and will be described in detail below.

The mold used in this method is an upper mold 5 and a lower mold 6 as mentioned above. Either or both of these molds are movable in up and down directions.

The cavity faces of these molds are rendered into a steric form corresponding to the form of the light weight stampable sheet shaped body desired as the product.

In this case, the concave portion of the mold face of the lower mold formed in correspondence with the form of the shock absorbing body has an opening equal to or somewhat larger than the face of the shock absorbing body to be adhered to the substrate.

In the first shaping step, both the molds are opened and the shock absorbing body having a previously shaped form is housed in the concave portion formed in the face of the lower mold corresponding to the form of the shock absorbing body. In this case, it is favorable that the upper end face of the shock absorbing body (the adhesion face to the substrate) is set so as to be equal to or somewhat higher than the cavity face of the lower mold.

Furthermore, when the shock absorbing body is made from a material having a poor adhesiveness to the substrate by heat, the adhesion face of the shock absorbing body to the substrate is required to be previously subjected to a proper treatment such as sticking on of thermoplastic resin film (hot melt film) capable of adhering by heat or coating with hot melt adhesive so as to adhere and integrally unite with the heated paper-made stampable sheet.

After the shock absorbing body has been housed in the mold the paper-made stampable sheet previously expanded under heating above the melting temperature of the matrix resin using a far-infrared ray heating furnace or the like and having a porosity of not less than 50 volume% and the skin 2 are supplied so as to cover the shock absorbing body. In this case, it is favorable that the expanded sheet has a porosity of not less than 80 volume% by heating. This expanded sheet may directly be placed on the face of the lower mold, or may be placed in a floating state with respect to the mold face by holding the sheet ends with clamping frames and the like. Furthermore, the skin may be supplied so as to directly pile on the expanded sheet or may be supplied at a distance separated from the expanded sheet by holding its end portions with the parting face of the upper mold or by clamping frames for the skin.

Moreover, it is possible that a previously shaped skin is used and set on the surface of the upper mold.

After the shock absorbing body 16, the paper-made stampable sheet expanded by heating and the skin 2 are supplied between both the molds, the clamping is carried out to a desired product thickness so as to make the porosity of the resin sheet not less than 50 volume%, whereby the heat-expanded sheet used as the substrate is shaped into a given form and at the same time the skin 2 and the shock absorbing body 16 are adhered and integrally united by the heat of the heated sheet and the clamping pressure.

When clamping, a method of setting the cavity clearance at the completion of the clamping by means of a stopper 11 arranged in the mold is simple and sure and favorable in industry.

After the completion of the clamping, the molds are cooled and opened to take out the product therefrom.

Thus, there is easily produced a light weight stampable sheet shaped body in which the fiber reinforced thermoplastic resin layer having a porosity of not less than 50 volume% is used as a substrate and is adhered at its design-side surface with the skin and united at its back surface with the shock absorbing body.

In these production methods, even when the thermoplastic resin film is previously adhered to one surface or both surfaces of the paper-made sheet used as starting material, the resultant composite sheet is heated so as to have a porosity of not less than 50 volume% and then supplied between the molds.

When the shock absorbing body is a rib structure of thermoplastic resin, the concave portion of the mold is rendered into a form corresponding to the rib form and the substrate adhered with the skin is first shaped in the same manner as described above without housing the shock absorbing body in the concave portion, and then molten resin is supplied from a supply port for the molten resin by means of a molten resin passage formed in the inside of the mold and opening in the concave portion at the clamped state and then the molds are cooled, whereby there can be obtained a light weight stampable sheet shaped body for use as a shock absorbing product in which the rib of thermoplastic resin is strongly united with the substrate.

In the light weight stampable sheet shaped body used as a shock absorbing product according to the invention, not only the shock absorbing body but also the substrate itself is made from a fiber reinforced thermoplastic resin layer having a high porosity, so that the shock absorbability is very excellent and the appearance is good owing to the adhesion of the skin and hence the shaped body itself may be used as an interior member or the like. Further, its rigidity, adhesiveness to skin, non-permeability and weight reduction are excellent.

Examples

The invention will concretely be described with reference to examples below. Moreover, the thermoplastic resin and reinforcing fibers constituting the paper-made stampable sheet, the organic fiber nonwoven fabric, the films, and the skin used in these examples are as follows, but they are not intended as limitations thereof.

. Thermoplastic resin

Polypropylene particle A: homopolypropylene (melting point: 162°C, MFR: 65 g/10 min)
Polypropylene particle B: polypropylene (melting point: 130°C)

. Reinforcing fiber

Glass fiber A: chopped strand (length: 25 mm, diameter: 13 μm)
Glass fiber B: chopped strand (length: 25 mm, diameter: 17 μm)

. Organic fiber nonwoven fabric

Organic fiber nonwoven fabric A: polyester fiber spun bond (weight: 50 g/m$^2$, thickness: 0.45 mm)
Organic fiber nonwoven fabric B: polyester fiber spun bond (weight: 18 g/m$^2$, thickness: 0.16 mm)

. Film

Film C1: two-layer film formed by dry lamination process, in which the first layer is polyethylene (MFR: 15 g/10 min, melting point: 115°C) of 60 μm in thickness and the second layer is 6-nylon (melting point: 215°C) of 25 μm in thickness
Film C2: two-layer film formed by dry lamination process, in which the first layer is polyethylene (MFR: 15 g/10 min, melting point: 115°C) of 60 μm in thickness and the second layer is polyethylene terephthalate (melting point: 230°C) of 25 μm in thickness
Film C3: two-layer film formed by dry lamination process, in which the first layer is polypropylene (MFR: 4 g/10 min, melting point: 155°C) of 60 μm in thickness and the second layer is 6-nylon (melting point: 215°C) of 25 μm in thickness
Film D1: three-layer film formed by dry lamination process, in which the first layer is polyethylene (MFR: 15 g/10 min, melting point: 115°C) of 60 μm in thickness and the second layer is 6-nylon (melting point: 215°C) of 25 μm in thickness and the third layer is polyethylene (MFR: 15 g/10 min, melting point: 115°C) of 40 μm in thickness
Film D2: three-layer film formed by dry lamination process, in which the first layer is polypropylene (MFR: 4 g/10 min, melting point: 155°C) of 60 μm in thickness and the second layer is 6-nylon (melting point: 215°C) of 25 μm in thickness and the third layer is polyethylene (MFR: 15 g/10 min, melting point: 115°C) of 40 μm

in thickness

Film D3: three-layer film formed by dry lamination process, in which the first layer is polypropylene (MFR: 4 g/10 min, melting point: 155°C) of 60 μm in thickness and the second layer is 6-nylon (melting point: 215°C) of 25 μm in thickness and the third layer is modified olefinic hot melt (melting point: 100°C) of 40 μm in thickness

Moreover, the MFR of the polypropylene was the value measured at 230°C and 2.16 kgf according to JIS K6785, and the MFR of the polyethylene was the value measured at 190°C and 2.16 kgf according to JIS K6760.

. Skin

Skin A: polyester organic fiber nonwoven fabric thickness: 2 mm) provided with backing material and hot melt layer

Skin B: polyester organic fiber nonwoven fabric (thickness: 2 mm) provided with backing material but not provided with hot melt layer

In these Examples, tests were carried out on the shaped bodies as follows :-

A test piece of 150 mm in length and 50 mm in width was cut out from the shaped body and subjected to a three-point bending test at a span of 100 mm and a crosshead speed of 50 mm/min under loading from the skin side to measure a maximum load and elastic gradient. Further, a permeability test was carried out according to ASTM-D737 to evaluate the permeability. Moreover, a piece 150 mm in length and 25 mm in width for a peeling test (T-peel test) was cut out and subjected to a usual tensile test (tensile rate: 50 mm/min) at an opened state of 50 mm☐ from the end to measure the peel strength as an average value of maximum load and minimum load. The results are shown in Table 1.

(Example 1)

A web was obtained by mixing and paper-making 50% of polypropylene particle A, 25% of glass fiber A and 25% of glass fiber B based on dry weight so as to have a total weight of 600 g/m$^2$. After film D1 was laminated on the web so that the first layer faced the web, they were heated to 210°C and the heated film and web were placed between cooled plates at 25°C and pressed at a pressure of 5 kgf/cm$^2$ to obtain a densely solidified paper-made stampable sheet.

The paper-made stampable sheet was heated at a heater setting temperature of 250°C by means of a far-infrared ray heater for 2 minutes, and then a skin B (not provided with hot melt layer) was placed on the film D1 of the sheet expanded under heating. The substrate was compressed together with the skin in molds having a clearance set to 4 mm, and cooled to obtain a light weight stampable sheet shaped body provided with the skin (see Fig. 2).

The expansion magnification of the substrate in the skin stuck shaped body was about 4 times.

(Example 2)

A web was obtained by mixing and paper-making 50% of polypropylene particle A, 25% of glass fiber A and 25% of glass fiber B based on dry weight so as to have a total weight of 600 g/m$^2$. After film C1 was laminated on the web so that the first layer faced the web, they were heated to 210°C and the heated film and web were placed between cooled plates at 25°C and pressed at a pressure of 5 kgf/cm$^2$ to obtain a densely solidified paper-made stampable sheet.

The paper-made stampable sheet was heated at a heater setting temperature of 250°C by means of a far-infrared ray heater for 2 minutes, and then a skin A (provided with hot melt layer) was placed on the film C1 of the sheet expanded by heating. The substrate was compressed together with the skin in molds having a clearance set to 4 mm and cooled to obtain a light weight stampable sheet shaped body provided with the skin (see Fig. 2).

The expansion magnification of the substrate in the skin stuck shaped body was about 4 times.

(Example 3)

The same procedure as in Example 2 was repeated except that film C2 was used instead of film C1 to obtain a skin stuck light weight stampable sheet shaped body.

The expansion magnification of the substrate in the skin stuck shaped body was about 4 times.

(Example 4)

The same procedure as in Example 7 was repeated except that film C3 was used instead of film C1 to obtain a skin stuck light weight stampable sheet shaped body.

The expansion magnification of the substrate in the skin stuck shaped body was about 4 times.

(Example 5)

The same procedure as in Example 1 was repeated except that film D2 was used instead of film D1 to obtain a skin stuck light weight stampable sheet shaped body.

The expansion magnification of the substrate in the skin stuck shaped body was about 4 times.

(Example 6)

The same procedure as in Example 1 was repeated except that film D3 was used instead of film D1 to obtain a skin stuck light weight stampable sheet shaped body.

The expansion magnification of the substrate in the skin stuck shaped body was about 4 times.

(Example 7)

The same procedure as in Example 5 was repeated except that the ratio of 45% of glass fiber A and 5% of glass fiber B was used instead of the glass fiber ratio of Example 5 to obtain a skin stuck light weight stampable sheet shaped body.

The expansion magnification of the substrate in the skin stuck shaped body was about 4 times.

(Example 8)

The same procedure as in Example 5 was repeated except that the ratio of 5% of glass fiber A and 45% of glass fiber B was used instead of the glass fiber ratio of Example 5 to obtain a skin stuck light weight stampable sheet shaped body.

The expansion magnification of the substrate in the skin stuck shaped body was about 4 times.

(Example 9)

The same procedure as in Example 6 was repeated except that polypropylene particle B was used instead of polypropylene particle A to obtain a skin stuck light weight stampable sheet shaped body.

The expansion magnification of the substrate in the skin stuck shaped body was about 4 times.

(Example 10)

A web was obtained by mixing and paper-making 50% of polypropylene particle A, 25% of glass fiber A and 25% of glass fiber B based on dry weight so as to have a total weight of 600 $g/m^2$.

Organic fiber nonwoven fabric A and organic fiber nonwoven fabric B were laminated on the surfaces of the web and film C1 was laminated on the organic fiber nonwoven fabric A located on one surface so that the first layer of the film was nearest the web side to obtain a light weight stampable sheet.

The laminate was heated to 210°C and the heated laminate was placed between cooled plates at 25°C and pressed at a pressure of 5 kgf/cm$^2$ to obtain a densely solidified paper-made stampable sheet.

The paper-made stampable sheet was heated at a heater setting temperature of 250°C by means of a far-infrared ray heater for 2 minutes, and then the skin B was placed on film C1 of the thus expanded stampable sheet.

The substrate together with the skin B was then compressed in molds having a clearance set to 4 mm, which were cooled to obtain a light weight stampable sheet shaped body provided with the skin (see Fig. 5).

The expansion magnification of the substrate was about 4 times.

Table 1

|  |  | Maximm load (kgf) | Elastic gradient (kgf/mm) | Permeating amount (cc/cm$^2$ sec) | Peel strength (kgf/cm) |
|---|---|---|---|---|---|
| Example | 2 | 1.6 | 2.1 | 0.0 | 0.40 |
|  | 3 | 1.8 | 2.3 | 0.0 | 0.61 |
|  | 4 | 1.8 | 2.2 | 0.0 | 0.63 |
|  | 1 | 1.9 | 2.3 | 0.0 | 0.55 |
|  | 5 | 2.2 | 2.6 | 0.0 | 0.71 |
|  | 6 | 2.1 | 2.4 | 0.0 | 0.95 |
|  | 7 | 2.3 | 2.8 | 0.0 | 0.20 |
|  | 8 | 1.7 | 2.1 | 0.0 | 0.93 |
|  | 9 | 1.4 | 1.9 | 0.0 | 0.71 |
|  | 10 | 2.6 | 3.1 | 0.0 | 1.05 |

As can be seen from the results of Examples 1-9 shown in Table 1, in the light weight stampable sheet shaped body according to the invention, at least one of the rigidity, non-permeability and adhesiveness between substrate and skin can be improved by properly selecting the multi-layer thermoplastic resin film to be laminated on the surface of the web. Particularly, it has been confirmed that complete non-permeability can be realized when a film having a melting point higher than that of the thermoplastic resin constituting the web remains on the surface of the substrate or between the substrate and the skin. Moreover, the thermoplastic resin film forms a smooth surface at the face contacting with the skin, so that the adhesion to the skin is facilitated. Further, when the thermoplastic resin film includes a resin layer having a low melting point adjacent to the skin, an impregnated adhesive layer is formed even when the skin is not provided with a hot melt coating thus confirming that good adhesion is obtained by the anchor effect.

As can be seen from the results of Example 10 shown in Table 1, in the light weight stampable sheet shaped body according to the invention, a higher rigidity can be developed when an organic fiber nonwoven fabric having a melting point higher than that of the polypropylene of the web is present on the surface of the web either alone or in the form of a sandwich structure laminated with the thermoplastic resin film. Particularly, it has been confirmed that complete non-permeability can be realized when a film having a melting point higher than that of the thermoplastic resin constituting the web remains on the surface of the substrate or between the substrate and the skin.

INDUSTRIAL APPLICABILITY

As mentioned above, according to the invention, there can be provided a paper-made stampable sheet having a high rigidity and improved adhesiveness and non-permeability, whereby there can easily be obtained a light weight stampable sheet shaped body having a high rigidity and an excellent non-permeability as well as a skin-stuck light weight stampable sheet shaped body having excellent adhesiveness between substrate and skin and high rigidity and complete non-permeability irrespectively of the adhesiveness of the skin.

Therefore, the light weight stampable sheet shaped body according to the invention can advantageously be applied to wide fields requiring high rigidity and weight reduction such as automobile interior members, e.g. ceiling members, door trims and the like, household electric goods, building materials and so on.

**Claims**

1.  A fibre-reinforced composite sheet (10) formed by piling a multilayer film onto a sheet-like web obtained by paper-making a mixture of a thermoplastic resin (3) and reinforcing fibres, characterised in that the multilayer film is comprised of (A) a layer of a thermoplastic resin having a melt viscosity during compression shaping under heating larger than that of the thermoplastic resin constituting the web, and (B) a layer having a permeability of zero according to ASTM-D737 and the ability to adhere a decorative skin, wherein the multilayer film is piled on at least one surface of the web so as to locate the layer (A) nearest to the surface of the web, and wherein the sheet is heated above the melting point of the thermoplastic resin constituting the web and compressed and then cooled and solidified at a compressed state.

2. A sheet (10) according to claim 1, wherein said reinforcing fibres are comprised of at least two kinds of glass fibres having different fiber sizes, in an amount satisfying the equation W2/(W1+W2) is 0.3-0.7 wherein W1 is the amount of small-size fibres added by wt% and W2 is the amount of large-size fibres added by wt%.

3. A sheet (10) according to claim 1 or 2, wherein the reinforcing fibres have been subjected to a surface treatment with a silane coupling agent.

4. A sheet (10) according to claim 1, 2 or 3,
wherein the compounding ratio of the reinforcing fibres and thermoplastic resin is from 10/90 to 70/30, inclusive, by weight.

5. A sheet (10) according to any preceding claim, wherein said multilayer film is a two-layer film comprised of a first resin layer and a second resin layer, said first resin layer is comprised of the thermoplastic resin having a melt viscosity in the compression shaping under heating larger than that of the thermoplastic resin constituting the web, said secon resin layer is the layer having zero permeability and is comprised of a resin (14) having a higher melting point than that of the thermoplastic resin constituting the web, and wherein the first resin layer abuts a surface of said web.

6. A sheet (10) according to any of claims 1 to 4, wherein said multilayer film is a three-layer film comprised of a first resin layer, a second resin layer, and a third resin layer, said first resin layer is comprised of the thermoplastic resin having a melt viscosity during compression shaping under heating larger than that of the thermoplastic resin constituting the web, said second resin layer is the layer having zero permeability and is comprised of a resin (14) having a higher melting point than that of the thermoplastic resin constituting the web, said third resin layer is comprised of a resin (13) having a lower melting point than that of the thermoplastic resin constituting the web, and wherein the first resin layer abuts a surface of said web.

7. A sheet (10) according to claim 5 or 6, wherein said thermoplastic resin constituting the web is polypropylene, said polypropylene having a melting point of at least 135°C and wherein said second resin layer is comprised of a resin having a melting point higher than that of said polypropylene by more than 10°C.

8. A sheet (10) according to claim 5 or 6, wherein said second resin layer is comprised of a resin selected from the group consisting of a polyamide resin and a polyester resin.

9. A sheet (10) according to claim 6, wherein said thermoplastic resin constituting the web is polypropylene, said polypropylene having a melting point of at least 135°C and said third resin layer is comprised of a resin selected from the group consisting of polypropylene and polyethylene, said resin having a lower melting point than that of the thermoplastic resin constituting the web.

10. A sheet (10) according to claim 6, wherein said thermoplastic resin constituting the web is polypropylene, said polypropylene having a melting point of at least 135°C and said third resin layer is comprised of a resin having a melting point lower than that of said polypropylene, thereby forming a hot melt layer.

11. A sheet (10)according to claim 5 or 6, wherein said thermoplastic resin constituting the web is polypropylene, said polypropylene having a melting point of at least 135°C and wherein said first resin layer is comprised of a polyolefinic resin or a modified resin thereof, and wherein said first resin layer has a melt flow rate of 10 or less.

12. A sheet (10) according to claim 5 or 6, wherein said melt viscosity of said first resin layer is made higher than that of said thermoplastic resin constituting the web by including a filler in said first resin layer.

13. A sheet (10) according to any of claims 1 to 4, wherein an organic fiber non-woven fabric (4) made from a resin having a melting point higher than that of said thermoplastic resin constituting the web is interposed between said web and said multilayer film.

14. A sheet (10) according to claim 13, wherein said thermoplastic resin constituting the web is polypropylene having a melting point of at least 135°C and wherein said resin constituting the organic fiber non-woven fabric comprises a resin having a higher melting point than said polypropylene by more than 10°C.

15. A sheet (10) according to claim 13, wherein said organic fiber non-woven fabric (4)is comprised of a resin selected from the group consisting of a polyamide resin and a polyester resin.

16. A sheet (10) according to claim 1, 5 or 6, wherein a surface of said web opposite to said multilayer film laminated surface is laminated with only a layer of an organic fiber non-woven fabric (4), said organic fiber non-woven fabric (4) having a higher melting point than that of said thermoplastic resin constituting the web.

17. A sheet (10) according to claim 1, wherein said thermoplastic resin film layer is a polypropylene, said polypropylene having a melting point of at least 135°C, wherein said film is comprised of a resin having substantially the same structure as said polypropylene, and wherein said film has a melt flow rate of 10 or less.

18. A shaped body formed by expanding the composite sheet (10) defined in claim 1, 5 or 6 under heating, thereby forming an expansion sheet (12), and compression shaping said expansion sheet so as to decrease the density of said body after compression shaping to a value lower than the density, wherein said density is measured at a porosity of zero percent.

19. A shaped body provided with a skin formed by expanding the composite sheet (10) defined in claim 1, 5 or 6 under heating, thereby forming an expansion sheet (12), piling said expansion sheet on a skin (2) thereby forming a layered pile, and compression- shaping said layered pile so as to decrease the density of said body after said compression- shaping to a value lower than the density, wherein said density is measured at a porosity of zero percent.

20. A shaped body according to claim 19, wherein the porosity of a portion of said body other than said skin (2) is 50% or more.

21. A shaped body according to claim 20, wherein said shaped body has a design face and a non-design face, wherein a shock absorbing body (16) is arranged on at least a part of the non-design face of said shaped body, and wherein said non-design face is not provided with the skin (2).

22. A shaped body according to claim 21, wherein said shock absorbing body (16) is a fiber reinforced thermoplastic resin shaped body having a porosity of 65% or more.

23. A shaped body according to claim 21, wherein said shock absorbing body (16) is a thermoplastic resin foamed body having closed cells.

24. A shaped body according to claim 21, wherein said shock absorbing body (16) is a ribbed body made from a thermoplastic resin.

25. A method of producing a stampable sheet shaped body, comprising the steps of:

    expanding the composite sheet (10) defined in claim 1 under heating to form an expansion sheet (12);
    supplying the expansion sheet (12) and a skin (2) between a pair of opened female (5) and male (6) molds wherein said expansion sheet (12) and said skin (2) are arranged in a pile;
    clamping said pile so that the expansion thickness of said expanded stampable sheet is 40-80%; and
    compressing said pile in said molds to integrally unite said expansion sheet (12) with said skin (2).

26. A method according to claim 25, wherein said composite sheet is a material expanding under heat to at least 5 times the theoretical thickness measured at a porosity of zero percent.

27. A method according to claim 25, wherein said skin (2) has a back surface and an outer surface and a thermoplastic resin layer is laminated on said back surface to form a composite skin wherein said thermoplastic resin layer is fused to said back surface by the surface temperature of said expansion sheet (12).

28. A method according to claim 25, wherein a thermoplastic resin film fusible by the heat of the expansion sheet (12) is interposed between said expansion sheet and said skin (2).

29. A method according to claim 25, wherein said skin (2) has a back surface and an outer surface and a first thermoplastic resin layer (14) not fusible by the surface temperature of said expansion sheet (12) is laminated to said back surface and a second thermoplastic resin layer (13) fusible by the surface temperature of said expansion

# EP 0 758 577 B1

sheet is laminated to said first thermoplastic resin layer to form a composite skin.

30. A method according to claim 25, wherein said skin (2) has a back surface and an outer surface and a thermoplastic resin layer (14) not fusible by the surface temperature of said expansion sheet (12), is laminated on said back surface to form a composite skin and a second thermoplastic resin layer (13), fusible by the surface temperature of the expansion sheet, is interposed between said composite skin and said expansion sheet (12).

31. A method according to claim 25, wherein said skin (2) has a back surface and an outer surface and a three-layer film is laminated on said back surface to form a composite skin, wherein said three-layer film is comprised of a first layer, having a top surface and a bottom surface, comprised of a thermoplastic resin (14) not fusible by the surface temperature of said expansion sheet (12), and two second layers, comprised of a thermoplastic resin (13) fusible by the surface temperature of said expansion sheet (12), wherein one of said second layers is laminated to said top surface of said first layer, and the other second layer is laminated to said bottom surface of said first layer.

32. A method according to claim 28, wherein said thermoplastic resin film interposed between said expansion sheet (12) and said skin is a three-layer film, wherein said three-layer film is comprised of a first layer, having a top surface and a bottom surface, comprised of a thermoplastic resin (14) not fusible by the surface temperature of said expansion sheet (12), and two second layers, comprised of a thermoplastic resin (13) fusible by the surface temperature of said expansion sheet (12), wherein one of said second layers is laminated to said top surface of said first layer, and the other of said second layers is laminated to said bottom surface of said first layer.

33. A method according to any of claims 28 to 32, wherein said thermoplastic resin fusible by the surface temperature of said expansion sheet has a melting temperature of 20-80°C below said surface temperature of said expansion sheet.

34. A method according to claim 31 or 32 wherein said second layers consist of a melt layer and a lower-melt layer, said lower-melt layer having a melting temperature of 20-80°C below said surface temperature of said expansion sheet (12), said melt layer having a melting temperature of 10-50°C below said surface temperature of said expansion sheet, and wherein said melt layer is laminated on said bottom surface of said first layer and said lower-melt layer is laminated on said top surface of said first layer, said top surface of said first layer facing said skin.

35. A method according to claim 25, wherein said composite sheet (10) is laminated with a thermoplastic resin sheet for preventing rise of fibres from the web.

36. A method according to claim 25, wherein the sheet for preventing rise of fibres is placed on that face of one of said molds that faces the expansion sheet.

## Patentansprüche

1. Faserverstärkte Verbundmatte (10), hergestellt durch Aufbringen einer mehrschichtigen Folie auf ein mattenartiges Gewebe, welches durch Verwendung eines Gemisches aus Thermoplastharz (3) und Verstärkungsfasern in einem Papierherstellungsverfahren erhalten wird, dadurch gekennzeichnet, dass die mehrschichtige Folie umfasst (A) eine Schicht eines Thermoplastharzes, dessen Schmelzviskosität beim Druckformen unter Erhitzen größer als die des Thermoplastharzes ist, welches das Gewebe ausmacht, und (B) eine Schicht, deren Durchlässigkeit gemäß ASTM-D737 Null beträgt, und die eine Zierhaut binden kann, wobei die mehrschichtige Folie auf mindestens eine Oberfläche des Gewebes aufgebracht wird, so dass die Schicht (A) nächst der Gewebeoberfläche zu liegen kommt, und die Matte über den Schmelzpunkt des Thermoplastharzes, welches das Gewebe ausmacht, erhitzt und gepresst, und dann gekühlt und im gepressten Zustand verfestigt wird.

2. Matte (10) nach Anspruch 1, wobei die Verstärkungsfasern mindestens zwei Arten Glasfasern mit unterschiedlichen Fasergrößen in einer Menge umfassen, die die Gleichung W2/(W1 + W2) ist gleich 0,3 bis 0,7 erfüllt, wobei W1 die Menge der in Gew.% zugegebenen Menge an kleinen Fasern ist und W2 die Menge an in Gew.% zugegebene Menge an großen Fasern ist.

3. Matte (10) nach Anspruch 1 oder 2, wobei die Verstärkungsfasern einer Oberflächenbehandlung mit einem Silan-Kupplungsmittel unterworfen worden sind.

**4.** Matte (10) nach Anspruch 1, 2 oder 3, wobei das Compoundierungsverhältnis von Verstärkungsfasern und Thermoplastharz von 10/90 bis 70/30 einschließlich, bezogen auf das Gewicht, reicht.

**5.** Matte (10) nach einem vorhergehenden Anspruch, wobei die mehrschichtige Folie eine zweischichtige Folie ist, umfassend eine erste Harzschicht und eine zweite Harzschicht, wobei die erste Harzschicht das Thermoplastharz umfasst, dessen Schmelzviskosität beim Pressformen unter Erhitzen größer als diejenige des Thermoplastharzes ist, welches das Gewebe ausmacht, und die zweite Harzschicht diejenige Schicht mit einer Permeabilität von Null ist und ein Harz (14) umfasst, dessen Schmelzpunkt höher als der des Thermoplastharzes ist, welches das Gewebe ausmacht, und wobei die erste Harzschicht an eine Gewebeoberfläche stößt.

**6.** Matte (10) nach einem der Ansprüche 1 bis 4, wobei die mehrschichtige Folie eine dreischichtige Folie ist, umfassend eine erste Harzschicht, eine zweite Harzschicht und eine dritte Harzschicht, wobei die erste Harzschicht das Thermoplastharz umfasst, dessen Schmelzviskosität beim Pressformen unter Erhitzen größer als die des Thermoplastharzes ist, welches das Gewebe ausmacht, die zweite Harzschicht diejenige Schicht mit einer Permeabilität von Null ist und ein Harz (14) umfasst, dessen Schmelzpunkt höher als der des Thermoplastharzes ist, welches das Gewebe ausmacht, die dritte Harzschicht ein Harz (13) umfasst, dessen Schmelzpunkt niedriger als der des Thermoplastharzes ist, welches das Gewebe ausmacht, und wobei die erste Harzschicht an eine Gewebeoberfläche stößt.

**7.** Matte (10) nach Anspruch 5 oder 6, wobei das Thermoplastharz, welches das Gewebe ausmacht, Polypropylen ist, dessen Schmelzpunkt mindestens 135°C beträgt, und die zweite Harzschicht ein Harz umfasst, dessen Schmelzpunkt mehr als 10°C höher als der des Polypropylens ist.

**8.** Matte (10) nach Anspruch 5 oder 6, wobei die zweite Harzschicht ein Harz umfasst, ausgewählt aus der Gruppe, bestehend aus einem Polyamidharz und einem Polyesterharz.

**9.** Matte (10) nach Anspruch 6, wobei das Thermoplastharz, welches das Gewebe ausmacht, Polypropylen ist, dessen Schmelzpunkt mindestens 135°C beträgt, und die dritte Harzschicht ein Harz umfasst, ausgewählt aus der Gruppe, bestehend aus Polypropylen und Polyethylen, und das Harz einen niedrigeren Schmelzpunkt als das Thermoplastharz hat, welches das Gewebe ausmacht.

**10.** Matte (10) nach Anspruch 6, wobei das Thermoplastharz, welches das Gewebe ausmacht, Polypropylen ist, dessen Schmelzpunkt mindestens 135°C beträgt, und die dritte Harzschicht ein Harz umfasst, dessen Schmelzpunkt niedriger als der des Polypropylens ist, wodurch eine Heißschmelzschicht gebildet wird.

**11.** Matte (10) nach Anspruch 5 oder 6, wobei das Thermoplastharz, welches das Gewebe ausmacht, Polypropylen ist, dessen Schmelzpunkt mindestens 135°C beträgt, die erste Harzschicht ein Polyolefinharz oder ein modifiziertes Harz davon umfasst, und die erste Harzschicht eine Schmelzfließgeschwindigkeit von 10 oder weniger aufweist.

**12.** Matte (10) nach Anspruch 5 oder 6, wobei die Schmelzviskosität der ersten Harzschicht höher eingestellt wird als die des Thermoplastharzes, welches das Gewebe ausmacht, indem ein Füllstoff in die erste Harzschicht eingebracht wird.

**13.** Matte (10) nach einem der Ansprüche 1 bis 4, wobei ein organisches Faservlies (4) aus einem Harz mit einem höheren Schmelzpunkt als das Thermoplastharz, welches das Gewebe ausmacht, zwischen das Gewebe und die mehrschichtige Folie gefügt wird.

**14.** Matte (10) nach Anspruch 13, wobei das Thermoplastharz, welches das Gewebe ausmacht, Polypropylen ist, dessen Schmelzpunkt mindestens 135°C beträgt, und das Harz, welches das organische Faservlies ausmacht, ein Harz mit einem um mehr als 10°C höheren Schmelzpunkt als das Polypropylen umfasst.

**15.** Matte (10) nach Anspruch 13, wobei das organische Faservlies (4) ein Harz umfasst, ausgewählt aus der Gruppe, bestehend aus einem Polyamidharz und einem Polyesterharz.

**16.** Matte (10) nach Anspruch 1, 5 oder 6, wobei eine Oberfläche des Gewebes gegenüber der mit einer mehrschichtigen Folie beschichteten Oberfläche nur mit einer Schicht eines organischen Faservlieses (4) beschichtet ist, das einen höheren Schmelzpunkt als das Thermoplastharz hat, welches das Gewebe ausmacht.

**17.** Matte (10) nach Anspruch 1, wobei die Thermoplastharzfolienschicht Polypropylen ist, dessen Schmelzpunkt mindestens 135°C beträgt, und die Folie ein Harz umfasst, das im Wesentlichen die gleiche Struktur wie das Polypropylen aufweist, und die Folie eine Schmelzfließgeschwindigkeit von 10 oder weniger aufweist.

**18.** Formkörper, hergestellt durch Dehnung der Verbundmatte (10) nach Anspruch 1, 5 oder 6 unter Erhitzen, wodurch eine Dehnungsmatte (12) entsteht, und Pressformen dieser Dehnungsmatte, so dass die Dichte des Körpers nach dem Pressformen auf einen Wert gesenkt wird, der kleiner als die Dichte ist, wobei die Dichte bei einer Porosität von 0 % gemessen wird.

**19.** Formkörper mit einer Haut, hergestellt durch Dehnung der Verbundmatte (10) nach Anspruch 1, 5 oder 6 unter Erhitzen, wodurch eine Dehnungsmatte (12) entsteht, Aufbringen der Dehnungsmatte auf eine Haut (2), wodurch eine Schichtstruktur erhalten wird, und Pressformen der Schichtstruktur, so dass die Dichte des Körpers nach dem Pressformen auf einen Wert gesenkt wird, der kleiner als die Dichte ist, wobei die Dichte bei einer Porosität von 0 % gemessen wird.

**20.** Formkörper nach Anspruch 19, wobei die Porosität eines anderen Anteils des Körpers als die Haut (2) 50% oder mehr beträgt.

**21.** Formkörper nach Anspruch 20, wobei dieser eine Zierseite und eine nicht verzierte Seite hat, und ein stoßdämpfender Körper (16) an mindestens einem Teil der nicht verzierten Seite des Formkörpers befestigt ist, und die nicht verzierte Seite nicht mit der Haut (2) ausgestattet ist.

**22.** Formkörper nach Anspruch 21, wobei der Stoßdämpferkörper (16) ein faserverstärkter Thermoplastharz-Formkörper ist, dessen Porosität 65% oder mehr beträgt.

**23.** Formkörper nach Anspruch 21, wobei der Stoßdämpferkörper (16) ein geschlossenzelliger Thermoplastharz-Schaumstoffkörper ist.

**24.** Formkörper nach Anspruch 21, wobei der Stoßdämpfer (16) ein Rippenkörper aus Thermoplastharz ist.

**25.** Verfahren zur Herstellung eines Pressmatten-Formkörpers, umfassend die Schritte:

Dehnen der Verbundmatte (10) nach Anspruch 1 unter Erhitzen, so dass eine Dehnungsmatte (12) erhalten wird;
Einbringen der Dehnungsmatte (12) und einer Haut (2) zwischen ein Paar geöffneter Matrizen- (5) und Patrizen-Formen (6), wobei die Dehnungsmatte (12) und die Haut (2) schichtweise angeordnet werden;
Einspannen der Schichtstruktur, so dass die Dehnungsdicke der gedehnten pressfähigen Matte 40 bis 80% beträgt; und
Pressen der Schichtstruktur in den Formen, damit die Dehnungsfolie (12) einstückig mit der Haut (2) verbunden wird.

**26.** Verfahren nach Anspruch 25, wobei die Verbundmatte ein Material ist, das sich beim Erhitzen auf mindestens das 5fache der theoretischen Dicke ausdehnt, die bei 0% Porosität gemessen wird.

**27.** Verfahren nach Anspruch 25, wobei die Haut (2) eine Rückseite und eine Außenseite aufweist, und eine Thermoplastharzschicht auf die Rückseite aufgebracht wird, so dass eine Verbundhaut erhalten wird, wobei die Thermoplastharzschicht durch die Oberflächentemperatur der Dehnungsmatte (12) an die Rückseite geschweißt wird.

**28.** Verfahren nach Anspruch 25, wobei eine durch die Wärme der Dehnungsmatte (12) schmelzbare Thermoplastharzfolie zwischen die Dehnungsfolie und die Haut (2) gefügt wird.

**29.** Verfahren nach Anspruch 25, wobei die Haut (2) eine Rückseite und eine Außenseite aufweist, und eine erste Thermoplastharzschicht (14), die nicht durch die Oberflächentemperatur der Dehnungsmatte (12) schmelzbar ist, auf die Rückseite aufgebracht wird, und eine zweite Thermoplastharzschicht (13), die durch die Oberflächentemperatur der Dehnungsmatte schmelzbar ist, auf die erste Thermoplastharzschicht gebracht wird, damit eine Verbundhaut erhalten wird.

**30.** Verfahren nach Anspruch 25, wobei die Haut (2) eine Rückseite und eine Außenseite aufweist, und eine Thermoplastharzschicht (14), die nicht durch die Oberflächentemperatur der Dehnungsmatte (12) schmelzbar ist, auf die Rückseite aufgebracht wird, so dass eine Verbundhaut erhalten wird, und eine zweite Thermoplastharzschicht (13), die durch die Oberflächentemperatur der Dehnungsmatte schmelzbar ist, zwischen die Verbundhaut und die Dehnungsmatte (12) gefügt wird.

31. Verfahren nach Anspruch 25, wobei die Haut (2) eine Rückseite und eine Außenseite aufweist, und eine dreischichtige Folie auf die Rückseite aufgebracht wird, so dass eine Verbundhaut erhalten wird, und die dreischichtige Folie eine erste Schicht mit einer oberen und einer unteren Oberfläche umfasst, die ein Thermoplastharz (14) umfasst, welches nicht durch die Oberflächentemperatur der Dehnungsmatte (12) schmelzbar ist, und zwei zweite Schichten, umfassend ein Thermoplastharz (13), das durch die Oberflächentemperatur der Dehnungsmatte (12) schmelzbar ist, und eine der zweiten Schichten auf die obere Oberfläche der ersten Schicht und die andere zweite Schicht auf die untere Oberfläche der ersten Schicht aufgebracht wird.

32. Verfahren nach Anspruch 28, wobei die Thermoplastharzfolie, die sich zwischen der Dehnungsmatte (12) und der Haut befindet, eine dreischichtige Folie ist, welche eine erste Schicht mit einer oberen und einer unteren Oberfläche umfasst, umfassend ein Thermoplastharz (14), das nicht durch die Oberflächentemperatur der Dehnungsmatte (12) schmelzbar ist, und zwei zweite Schichten, umfassend ein Thermoplastharz (13), das durch die Oberflächentemperatur der Dehnungsmatte (12) schmelzbar ist, wobei eine der zweiten Schichten auf die obere Oberfläche der ersten Schicht aufgebracht wird, und die andere zweite Schicht auf die untere Oberfläche der ersten Schicht aufgebracht wird.

33. Verfahren nach einem der Ansprüche 28 bis 32, wobei das Thermoplastharz, welches durch die Oberflächentemperatur der Dehnungsmatte schmelzbar ist, eine Schmelztemperatur von 20 bis 80°C unter der Oberflächentemperatur der Dehnungsmatte aufweist.

34. Verfahren nach Anspruch 31 oder 32, wobei die zweiten Schichten aus einer Schmelzschicht und einer niedriger schmelzenden Schicht bestehen, wobei die niedriger schmelzende Schicht eine Schmelztemperatur aufweist, die 20 bis 80°C unter der Oberflächentemperatur der Dehnungsmatte (12) liegt, und die Schmelzschicht eine Schmelztemperatur aufweist, die 10 bis 50°C unter der Oberflächentemperatur der Dehnungsmatte liegt, und die Schmelzschicht auf die untere Oberfläche aufgebracht wird und die niedriger schmelzende Schicht auf die obere Oberfläche der ersten Schicht aufgebracht wird, und die obere Oberfläche der ersten Schicht zur Haut weist.

35. Verfahren nach Anspruch 25, wobei die Verbundmatte (10) mit einer Thermoplastharzmatte beschichtet ist, damit sich die Fasern nicht mehr aus dem Gewebe aufrichten.

36. Verfahren nach Anspruch 25, wobei sich die Matte auf der Seite der Form befindet, die zur Dehnungsmatte zeigt, damit sich die Fasern nicht mehr aufrichten.

**Revendications**

1. Feuille composite (10) renforcée de fibres, formée par empilement d'un film multicouche sur un tissu en forme de feuille obtenu par fabrication selon les techniques de papeterie d'un mélange de résine thermoplastique (3) et de fibres de renforcement, caractérisée par le fait que le film multicouche se compose de (A) une couche de résine thermoplastique ayant une viscosité de masse fondue pendant le façonnage par compression sous chauffage supérieure à celle de la résine thermoplastique constituant le tissu, et (B) une couche ayant une perméabilité de zéro selon ASTM-D737 et la capacité d'y adhérer une peau décorative, dans laquelle le film multicouche est empilé sur au moins une face du tissu, de manière à situer la couche (A) au plus près de la face du tissu, et dans laquelle la feuille est chauffée au-delà du point de fusion de la résine thermoplastique constituant le tissu et est comprimée et ensuite refroidie et solidifiée à l'état comprimé.

2. Feuille (10) suivant la revendication 1, dans laquelle les fibres de renforcement se composent d'au moins deux types de fibres de verre présentant des grandeurs de fibre différentes, en une quantité répondant à l'équation W2/(W1+W2) est égal à 0,3 à 0,7, où W1 est la quantité de fibres de petites dimensions ajoutée en % en poids et W2 est la quantité de fibres de grandes dimensions ajoutée en % en poids.

3. Feuille (10) suivant la revendication 1 ou 2, dans laquelle les fibres de renforcement ont été soumises à un traitement superficiel à l'aide d'un agent de couplage à base de silane.

**4.** Feuille (10) suivant la revendication 1, 2 ou 3, dans laquelle le rapport de mélange entre les fibres de renforcement et la résine thermoplastique est de 10/90 à 70/30 inclus en poids.

**5.** Feuille (10) suivant l'une ou l'autre revendication précédente, dans laquelle ledit film multicouche est un film à deux couches composé d'une première couche de résine et d'une seconde couche de résine, ladite première couche de résine étant constituée de la résine thermoplastique ayant une viscosité de masse fondue lors du façonnage par compression sous chauffage supérieure à celle de la résine thermoplastique constituant le tissu, ladite seconde couche de résine étant la couche ayant une perméabilité zéro et étant composée d'une résine (14) ayant un point de fusion supérieur à celui de la résine thermoplastique constituant le tissu, et dans laquelle la première couche de résine s'appuie sur une face dudit tissu.

**6.** Feuille (10) suivant l'une ou l'autre des revendications 1 à 4, dans laquelle ledit film multicouche est un film à trois couches composé d'une première couche de résine, d'une seconde couche de résine et d'une troisième couche de résine, ladite première couche de résine étant constituée de la résine thermoplastique ayant une viscosité de masse fondue pendant le façonnage par compression sous chauffage supérieure à celle de la résine thermoplastique constituant le tissu, ladite seconde couche de résine étant la couche ayant une perméabilité zéro et étant composée d'une résine (14) ayant un point de fusion supérieur à celui de la résine thermoplastique constituant le tissu, ladite troisième couche de résine étant composée d'une résine (13) ayant un point de fusion inférieur à celui de la résine thermoplastique constituant le tissu, et dans laquelle la première couche de résine s'appuie sur une face dudit tissu.

**7.** Feuille (10) suivant la revendication 5 ou 6, dans laquelle ladite résine thermoplastique constituant le tissu est du polypropylène, ledit polypropylène ayant un point de fusion d'au moins 135°C, et dans laquelle ladite seconde couche de résine est composée d'une résine ayant un point de fusion supérieur de plus de 10°C à celui du polypropylène.

**8.** Feuille (10) suivant la revendication 5 ou 6, dans laquelle ladite seconde couche de résine est composée d'une résine choisie parmi le groupe composé de résine polyamide et de résine polyester.

**9.** Feuille (10) suivant la revendication 6, dans laquelle ladite résine thermoplastique constituant le tissu est du polypropylène, ledit polypropylène ayant un point de fusion d'au moins 135°C et ladite troisième couche de résine est composée d'une résine choisie parmi le groupe composé de polypropylène et de polyéthylène, ladite résine ayant un point de fusion inférieur à celui de la résine thermoplastique constituant le tissu.

**10.** Feuille (10) suivant la revendication 6, dans laquelle ladite résine thermoplastique constituant le tissu est du polypropylène, ledit polypropylène ayant un point de fusion d'au moins 135°C, et ladite troisième couche de résine est composée d'une résine ayant un point de fusion inférieur à celui du polypropylène, formant ainsi une couche de masse fondue à chaud.

**11.** Feuille (10) suivant la revendication 5 ou 6, dans laquelle ladite résine thermoplastique constituant le tissu est du polypropylène, ledit polypropylène ayant un point de fusion d'au moins 135°C, et dans laquelle ladite première couche de résine est composée d'une résine de polyoléfines ou d'une résine modifiée de celles-ci, et dans laquelle ladite première couche de résine a un débit d'écoulement de masse fondue de 10 ou moins.

**12.** Feuille (10) suivant la revendication 5 ou 6, dans laquelle ladite viscosité de masse fondue de ladite première couche de résine est rendue supérieure à celle de ladite résine thermoplastique constituant le tissu en incluant une charge dans ladite première couche de résine.

**13.** Feuille (10) suivant l'une ou l'autre des revendications 1 à 4, dans laquelle un tissu non-tissé de fibres organiques (4) fabriqué à partir d'une résine ayant un point de fusion supérieur à celui de ladite résine thermoplastique constituant le tissu est interposé entre ledit tissu et ledit film multicouche.

**14.** Feuille (10) suivant la revendication 13, dans laquelle ladite résine thermoplastique constituant le tissu est du polypropylène ayant un point de fusion d'au moins 135°C, et dans laquelle ladite résine constituant le tissu non-tissé de fibres organiques (4) comprend une résine ayant un point de fusion supérieur de plus de 10°C à celui dudit polypropylène.

**15.** Feuille (10) suivant la revendication 13, dans laquelle ledit tissu non-tissé de fibres organiques (4) est composé d'une résine choisie parmi le groupe composé de résine polyamide et de résine polyester.

16. Feuille (10) suivant la revendication 1, 5 ou 6, dans laquelle une face dudit tissu opposée à ladite face stratifiée du film multicouche est stratifiée d'une seule couche d'un tissu non-tissé de fibres organiques (4), ledit tissu non-tissé de fibres organiques (4) ayant un point de fusion supérieur à celui de ladite résine thermoplastique constituant le tissu.

17. Feuille (10) suivant la revendication 1, dans laquelle ladite couche du film de résine thermoplastique est un polypropylène, ledit polypropylène ayant un point de fusion d'au moins 135°C, dans laquelle ledit film se compose d'une résine ayant sensiblement la même structure que ledit polypropylène, et dans laquelle ledit film a un débit d'écoulement de masse fondue de 10 ou moins.

18. Corps façonné formé par dilatation de la feuille composite (10) suivant la revendication 1, 5 ou 6 sous chauffage, en formant ainsi une feuille dilatée (12), et en façonnant par compression ladite feuille dilatée, de manière à réduire la densité dudit corps, après façonnage par compression, à une valeur inférieure à la densité, dans lequel ladite densité est mesurée à une porosité de zéro pour cent.

19. Corps façonné muni d'une peau, formé par dilatation de la feuille composite (10) suivant la revendication 1, 5 ou 6 sous chauffage, en formant ainsi une feuille dilatée (12), en empilant ladite feuille dilatée sur une peau (2), formant ainsi une pile en couches, et en façonnant par compression ladite pile en couches, de manière à réduire la densité dudit corps, après façonnage par compression, à une valeur inférieure à la densité, dans lequel ladite densité est mesurée à une porosité de zéro pour cent.

20. Corps façonné suivant la revendication 19, dans lequel la porosité d'une partie dudit corps autre que ladite peau (2) est de 50% ou plus.

21. Corps façonné suivant la revendication 20, dans lequel ledit corps façonné présente une face à filigrane et une face sans filigrane, dans lequel un corps absorbant les chocs (16) est disposé sur au moins une partie de la face sans filigrane dudit corps façonné, et dans lequel ladite face sans filigrane n'est pas munie de la peau (2).

22. Corps façonné suivant la revendication 21, dans lequel ledit corps absorbant les chocs (16) est un corps façonné en résine thermoplastique renforcée de fibres ayant une porosité de 65% ou plus.

23. Corps façonné suivant la revendication 21, dans lequel ledit corps absorbant les chocs (16) est un corps en mousse de résine thermoplastique présentant des cellules fermées.

24. Corps façonné suivant la revendication 21, dans lequel ledit corps absorbant les chocs (16) est un corps nervuré réalisé à partir d'une résine thermoplastique.

25. Procédé de fabrication d'un corps façonné d'une feuille à estamper, comprenant les étapes consistant à :

faire dilater la feuille composite (10) suivant la revendication 1 sous chauffage, pour former une feuille dilatée (12) ;
amener la feuille dilatée (12) et une peau (2) entre une paire de moules femelle (5) et mâle (6) ouverts dans lesquels ladite feuille dilatée (12) et ladite peau (2) sont disposées en pile ;
serrer ladite pile de sorte que l'épaisseur de dilatation de ladite feuille à estamper dilatée soit de 40 à 80% ; et
comprimer ladite pile dans lesdits moules, pour rendre solidaire ladite feuille dilatée (12) de ladite peau (2).

26. Procédé suivant la revendication 25, dans lequel ladite feuille composite est un matériau qui se dilate sous la chaleur à au moins 5 fois l'épaisseur théorique mesurée à une porosité de zéro pour cent.

27. Procédé suivant la revendication 25, dans lequel ladite peau (2) présente une face arrière et une face extérieure, et une couche de résine thermoplastique est stratifiée sur ladite face arrière, pour former une peau composite, dans lequel ladite couche de résine thermoplastique est fondue sur ladite face arrière par la température superficielle de ladite feuille dilatée (12).

28. Procédé suivant la revendication 25, dans lequel un film de résine thermoplastique pouvant fondre sous la chaleur de la feuille dilatée (12) est interposé entre ladite feuille dilatée et ladite peau (2).

**29.** Procédé suivant la revendication 25, dans lequel ladite peau (2) présente une face arrière et une face extérieure, et une première couche de résine thermoplastique (14) ne pouvant pas fondre sous la chaleur superficielle de ladite feuille dilatée (12) est stratifiée sur ladite face arrière et une seconde couche de résine thermoplastique (13) pouvant fondre sous la chaleur superficielle de ladite feuille dilatée (12) est stratifiée sur ladite première couche de résine thermoplastique, pour former une peau composite.

**30.** Procédé suivant la revendication 25, dans lequel ladite peau (2) présente une face arrière et une face extérieure, et une couche de résine thermoplastique (14) ne pouvant pas fondre sous la chaleur superficielle de ladite feuille dilatée (12) est stratifiée sur ladite face arrière, pour former une peau composite, et une seconde couche de résine thermoplastique (13), pouvant fondre sous la chaleur superficielle de la feuille dilatée (12), est interposée entre ladite peau composite et ladite feuille dilatée (12).

**31.** Procédé suivant la revendication 25, dans lequel ladite peau (2) présente une face arrière et une face extérieure et un film à trois couches est stratifié sur ladite face arrière, pour former une peau composite, dans lequel ledit film à trois couches est composé d'une première couche, présentant une face supérieure et une face inférieure, composée d'une résine thermoplastique (14) ne pouvant pas fondre sous la chaleur superficielle de ladite feuille dilatée (12), et deux secondes couches composées d'une résine thermoplastique (13) pouvant fondre sous la chaleur superficielle de ladite feuille dilatée (12), dans lequel l'une desdites secondes couches est stratifiée sur la face supérieure de ladite première couche et l'autre seconde couche est stratifiée sur ladite face inférieure de ladite première couche.

**32.** Procédé suivant la revendication 28, dans lequel ledit film de résine thermoplastique interposé entre ladite feuille dilatée (12) et ladite peau est un film à trois couches, dans lequel ledit film à trois couches est composé d'une première couche, présentant une face supérieure et une face inférieure, composée d'une résine thermoplastique (14) ne pouvant pas fondre sous la chaleur superficielle de ladite feuille dilatée (12), et deux secondes couches composées d'une résine thermoplastique (13) pouvant fondre sous la chaleur superficielle de ladite feuille dilatée (12), dans lequel l'une desdites secondes couches est stratifiée sur ladite face supérieure de ladite première couche et l'autre desdites secondes couches est stratifiée sur ladite face inférieure de ladite première couche.

**33.** Procédé suivant l'une quelconque des revendications 28 à 32, dans lequel ladite résine thermoplastique pouvant fondre sous la chaleur superficielle de ladite feuille dilatée a une température de fusion de 20 à 80°C au-dessous de ladite température superficielle de ladite feuille dilatée.

**34.** Procédé suivant la revendication 31 ou 32, dans lequel lesdites secondes couches consistent en une couche de masse fondue et une couche de masse fondue inférieure, ladite couche de masse fondue inférieure ayant une température de fusion de 20 à 80°C au-dessous de ladite température superficielle de ladite feuille dilatée (12), ladite couche de masse fondue ayant une température de fusion de 10 à 50°c au-dessous de ladite température superficielle de ladite feuille dilatée, et dans lequel ladite couche de masse fondue est stratifiée sur ladite face inférieure de ladite première couche et ladite couche de masse fondue inférieure est stratifiée sur ladite face supérieure de ladite première couche faisant face à ladite peau.

**35.** Procédé suivant la revendication 25, dans lequel ladite feuille composite (10) est stratifiée avec une feuille de résine thermoplastique, afin d'éviter le soulèvement de fibres du tissu.

**36.** Procédé suivant la revendication 25, dans lequel la feuille destinée à éviter le soulèvement de fibres du tissu est placée sur la face de l'un desdits moules faisant face à la feuille dilatée.

Fig. 1

1

Fig. 2

2
3
1

Fig. 3

4
1
4

Fig. 4

3
4
1
4
3

Fig. 5

2
3
4
1
4

Fig. 6

2
3
4
3
1
4

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

5

11

6

Concave portion

Fig. 20

5

2

10

11

6

16

Fig. 21

2

5

11

6

16

1